# EUROPEAN PATENT SPECIFICATION

(11) **EP 1 719 283 B1**
(45) Date of publication and mention of the grant of the patent: **08.05.2013**
(21) Application number: 05712935.5
(22) Date of filing: 04.02.2005
(51) Int. Cl.: G06F 21/32, G06F 21/34, H04L 9/32, G06F 15/16

(54) **METHOD AND APPARATUS FOR AUTHENTICATION OF USERS AND COMMUNICATIONS RECEIVED FROM COMPUTER SYSTEMS**
VERFAHREN UND VORRICHTUNG ZUR AUTHENTIFIKATION VON BENUTZERN UND VON COMPUTERSYSTEMEN EMPFANGENEN ÜBERMITTLUNGEN
PROCEDE ET APPAREIL D'AUTHENTIFICATION D'UTILISATEURS ET DE COMMUNICATIONS RECUES DE SYSTEMES INFORMATIQUES

(30) Priority: 04.02.2004 US 542101 P
(43) Date of publication of application: 08.11.2006
(73) Proprietor: EMC Corporation, Hopkinton, MA 01748 (US)
(72) Inventor: GASPARINI, Louis, San Mateo, CA 94402 (US); HARRIS, William, Woodside, CA 94062 (US)
(74) Representative: Liesegang, Eva
(86) International application number: PCT/US2005/003686
(87) International publication number: WO 2006/028488

(56) References cited:
- EP-A- 1 046 976
- WO-A-01/18636
- WO-A-03/048909
- US-A1- 2002 066 039
- US-A1- 2002 124 172
- US-A1- 2002 169 988
- US-A1- 2003 229 782
- US-B1- 6 460 141
- US-B1- 6 632 248
- LOFTESNESS S: "Responding to Phishing Attacks - A Glenbrook ActionMap" ANNOUNCEMENT GLENBROOKS, January 2004 (2004-01), pages 1-12, XP002307182

## Description

### Related Applications

This application claims the benefit of attorney docket number 1383, U.S. Provisional Application Serial Number 60/542,101 entitled, "Method and Apparatus for Authentication of Users and Communications Received From Computer Systems" filed on 2/4/04 by Louis Gasparini and William Harris, and is a continuation in part of attorney docket number 1366, application serial number 10/435,322, entitled, "METHOD AND APPARATUS FOR AUTHENTICATION OF USERS AND WEB SITES" filed on 5/9/2003 by Louis Gasparini and Charles Gotlieb.

### Field of the Invention

The present invention is related to computer security and more specifically to computer security for the Internet.

### Background of the Invention

The Internet and the World Wide Web allow users to communicate with software operating at various sites on the Web. The communication may be performed in real time, or via a messaging system such as e-mail. However, it may be helpful to allow one or both of these entities to ensure that the other entity with whom the entity is communicating really is that other entity.

If the web site believes it is communicating with one entity, but it is in fact communicating with a different entity, it may provide access to sensitive information of the entity with which it falsely believes it is communicating. It may cause the transfer of securities, the shipment of products or the delivery of services to the different entity in the name of the entity with which it believes it is communicating. For example, some operators of web sites lose significant amounts of money by shipping products or transferring cash or other securities to thieves who falsely identify themselves to the web site as a registered user.

Many of these thieves trick the users into providing confidential information that the thief can use to identify herself as a registered user, by appearing to the user as if a web site operated by the thief is in fact a web site with which the user has registered or by sending the user an e-mail message containing information or a link that can cause the user to provide confidential information to the thief, or both. For example, a thief may send out a batch of e-mails inviting the user to log on to paypal.com with a link to the web site paypai.com, hoping that the recipient of the e-mail is registered at the financial web site paypal.com. However, the thief capitalizes the last letter in her site to read paypaI.com, hoping the 'I' looks like the lower case last letter '1' in "paypal". The web pages provided by the web site paypai.com are then made to look like the web site paypal.com, and when the user attempts to log in, the user's username and password are captured by the thief's web site. The thief then logs into paypal.com using the user's username and password thus received and authorizes the transfer of money from the user's account into an account controlled by the thief.

In another variation of the scam, the thief provides to the user a link containing what appears to be a URL of the actual site, but in fact is a command to log into the thief's site. For example, a link that reads "http://" appended to "www.paypal.com/%sdafghdgk%fdsgsdhdsh..." may appear to be a genuine link to paypal.com, with a long list of parameters that extend off the end of the URL window in the user's browser. Unknown to the user, the above link actually terminates with "...@paypai.com", which causes the user to be logged into the web site paypai.com using as a username, the set of characters to the left of the "@" sign. The web site paypai.com allows any such username to log into the web site, and then operates as described above, presenting a replica of the paypal.com user interface to the user that allows the user to log on to the application software at the thief's web site (even though the phony username has been provided via the link). The thief then uses the username and password thus received to log onto the real paypal.com web site and make the transfer.

To combat this problem, some web sites provide a certificate to allow the user to verify that the web site is authentic, but the procedures for performing such authentication are complex, cumbersome and unknown to most users. Thus, conventional methods that could be used to allow a user to authenticate the web site are ineffective because they are too difficult to use.

Not only can a dishonest operator of a web site mislead a user into believing that a web site is authentic, a dishonest user can mislead an authentic web site into believing that the user is authentic. As described above, confidential information from a user can be captured and then used to cause the web site to believe it is dealing with that user. Some web sites place cookies on the user's computer and these cookies could be used to attempt to verify the possibility that the person attempting to log in is in fact that person. However, a cookie can be faked by a thief to indicate that the thief's computer system is the computer system of a user the thief is attempting to impersonate.

The related application described an arrangement by which a signed, encrypted cookie was placed on the user's computer system during a registration process that could be used by software to authenticate a user, and recognizable customization information was provided or indicated by the user to software that could be provided to the user to allow the user to authenticate a communication from a computer system. This approach works well, but has certain limitations, all of which are being addressed in this application.

One such limitation is the lack of a verifiable ability of the user to authenticate himself during the registration process. The related application employed the provision of an out-of-session identifier that the user received through means other than the communications session the user was using to register himself. However, the method may not be secure if the out-of-session method (e.g. a telephone call via a telephone number or an e-mail address) was not known to belong to the user or was not secure. Another limitation is that, once registered, the user can only authenticate himself from then on using the client computer system on which the cookie has been stored. Another limitation is the potential for multiple users of the computer system to view one another's customization information or for an unauthorized user of the computer system to view a user's customization information.

It can also be desirable to allow a user to authenticate an e-mail message or other communication without a significant chance that the confidentiality of the user's customization information will be compromised. As described herein, cookies and other persistent files can solve this problem. However, some e-mail clients do not support the use of cookies. Furthermore, it can be desirable to allow a user to authenticate an e-mail message without being connected to a network.

EP 1 046 976 A2 discloses a system which allows a user to authenticate the system prior to providing any user-privileged information to the system. This authentication is achieved by sending a set of user identification information to the host and then requiring the host to send back a unique message. Only if the host is able to return the appropriate unique message will the user provide to the host any user-privileged information.

US 2002/0066039 A1 describes a method to prevent the inadvertent disclosure of a password. A valid password input request results in a password entry screen being displayed to a user that includes authentication indicia known to the user. Failure to see the authentication indicia causes the user to know that the request is a spoof.

US 2003/0229782 A1 discloses a method and system for verifying over a network that a user attempting to sign in and access an account is the same individual that originally set up the account. Setup information is provided by the user when setting up the account, and the received setup information is encrypted and the encrypted information is sent back to the computer of the setup user and stored on the computer hard drive as an identification cookie. When the user attempts to sign in, the user information such as the user's name and password is compared with the information retrieved from the identification cookie file.

US 2002/0169988 A1 discloses a method and apparatus in which primary authentication information, such as user identification data are sent to an authentication unit via a primary channel such as over the Internet. Secondary authentication information is then generated by the authentication unit on a per-session basis and is sent to the user via an out-of-session channel. The user then transmits the secondary authentication information to the first unit, from where it is sent back to the authentication unit via the primary channel during the session.

What is needed is a system and method that can securely authenticate a user to a computer system, easily allow the user to authenticate communications from a computer system without requiring the user to use complex authentication procedures, or both, can authenticate a user even during the registration process, can allow a user to authenticate himself or herself to a computer system from various client computer systems or bypass the need for strict authentication, can protect the user's means of authenticating the computer system from others who have access to the user's client computer system, and can allow a user to authenticate e-mail messages or other communications without significant chance that the user's capability to authenticate the computer system will be compromised.

### Summary of Invention

The present invention provides a method according to claim 1 and a system according to claim 13.

A system and method provides an encrypted, signed cookie or other persistent file such as a Flash local shared object on a user's computer system to allow a computer system to identify and authenticate the user. In addition, customization information is associated with an identifier of the user to allow the user to recognize that communications received from the same or a different computer system are authentic. When the user requests a web page or other communication from a computer system, the persistent file is retrieved by the web site or computer system and the signature and user identifier contained in the persistent file or computer code may be checked to authenticate the user. An identifier in the persistent file may be used to identify the user and allow the computer system to provide the customization information the user can recognize to authenticate the web site or other communications from the computer system. The user can then trust communications that provide the customization information the user is expecting. If the customization information is missing or different, the user can refuse to provide confidential information to that computer system, or refuse to believe information provided by the computer system, thus protecting his or her username and password and other confidential information from a thief.

The system and method can authenticate the user before providing the persistent file by requesting information few people other than the user would know, and then verifying that information, for example using a third party. The customization information may be supplied only after the user has supplied a valid username in order to secure the customization information from others who may have access to the user's computer system. The persistent file may contain the user's static IP address, the MAC address of communication interface or another identifier of client computer system **260**, and/or a digital certificate, which may be checked when the persistent file is used for additional security. The user may indicate that he or she wishes to have the persistent file installed on a different computer system, or that the computer system can suspend authenticating the user or providing the customization information when the user is using a computer system that does riot contain the persistent file. A trusted computing subsystem, such as a biometric identification system or physical key may be used in place of the persistent file to allow users to use other computer systems that may not employ the cookie or provide additional security when authenticating a user.

The customization information may be provided in an e-mail message to allow the user to authenticate the message or its sender. A Flash movie or other code may allow the computer system providing the customization information in an e-mail or other communication to authenticate the user, even if the user's e-mail client or browser does not support the use of cookies. The customization information may be encrypted into the Flash movie itself or another file sent with the e-mail, so that the user can authenticate the e-mail message or other communication even when that user is not connected to a network.

The system and method can be used to authenticate a user and to allow the user to authenticate a computer system for the purpose of authorizing a payment, for example, using a financial instrument such as a credit card.

### Brief Description of the Drawings

Figure **1** is a block schematic diagram of a conventional computer system.
Figure **2A** is a block schematic diagram of a system for allowing a user to authenticate one or more communications from a computer system, and the same or a different computer system to authenticate the user according to one embodiment of the present invention.
Figure **2B** is a block schematic diagram of a system for allowing a user to authenticate a computer system, and the same or a different computer system to authenticate the user, for the purpose of authorizing a payment according to one embodiment of the present invention.
Figure **3A** is a flowchart illustrating a method of registering a user to allow the user to authenticate a communication from a computer system, a computer system to authenticate the user, or both, according to one embodiment of the present invention.
Figure **3B** is a flowchart illustrating a method of providing and receiving indicia of a user's identity according to one embodiment of the present invention.
Figure **3C** is a flowchart illustrating a method of allowing a computer system to authenticate a user and/or allowing the user to authenticate communications received from the same or a different computer system according to one embodiment of the present invention.
Figures **3D** and **3E** are a flowchart illustrating a method of allowing a user to optionally authenticate one or more communications from a computer system and a computer system to optionally authenticate a user and displaying information according to one embodiment of the present invention.
Figure **4** is a flowchart illustrating a method of authenticating by a user a communication from a computer system according to one embodiment of the present invention.
Figure **5A** is a block schematic diagram of the web application **240** of Figure **2** according to one embodiment of the present invention.
Figure **5B** is a flowchart illustrating a method of a method of authenticating a user to a computer system and authenticating a communication to the user from the same or a different computer system according to one embodiment of the present invention.
Figure **6** is a flowchart that continues Figure **3C** according to one embodiment of the present invention.
Figure **7****,** consisting of Figures **7A** and **7B****,** is a flowchart illustrating a method of allowing a roaming user to log in from a computer system other than the computer system from which the user registered according to one embodiment of the present invention.
Figure **8A** is a flowchart illustrating a method of allowing a user to authenticate an e-mail message according to one embodiment of the present invention.
Figure **8B** is a flowchart illustrating a method of allowing a user to authenticate an e-mail message and the same or a different computer system to authenticate the user according to one embodiment of the present invention.
Figure **9A** is a flowchart illustrating a method of paying for a transaction over the Internet according to one embodiment of the present invention.
Figure **9B** is a flowchart illustrating a method of receiving authorization to charge a financial instrument of a user according to one embodiment of the present invention.
Figure **10A** is a block schematic diagram of a Flash movie or other device used to display an e-mail message and customization information according to one embodiment of the present invention.
Figure **10B** is a flowchart illustrating a method of providing and displaying an e-mail message is shown according to one embodiment of the present invention.
Figure **11A** is a flowchart illustrating a method of registering a user according to one embodiment of the present invention.
Figure **11B** is a flowchart illustrating a method of authenticating a user according to one embodiment of the present invention.

### Detailed Description of a Preferred Embodiment

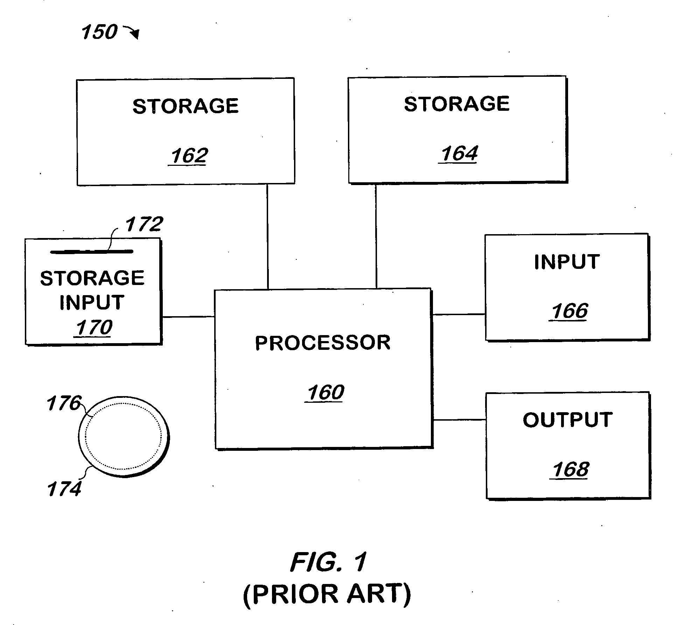

The present invention may be implemented as computer software on a conventional computer system. Referring now to Figure **1****,** a conventional computer system **150** for practicing the present invention is shown. Processor **160** retrieves and executes software instructions stored in storage **162** such as memory, which may be Random Access Memory (RAM) and may control other components to perform the present invention. Storage **162** may be used to store program instructions or data or both. Storage **164,** such as a computer disk drive or other nonvolatile storage, may provide storage of data or program instructions. In one embodiment, storage **164** provides longer term storage of instructions and data, with storage **162** providing storage for data or instructions that may only be required for a shorter time than that of storage **164.** Input device **166** such as a computer keyboard or mouse or both allows user input to the system **150.** Output **168,** such as a display or printer, allows the system to provide information such as instructions, data or other information to the user of the system **150.** Storage input device **170** such as a conventional floppy disk drive or CD-ROM drive accepts via input **172** computer program products **174** such as a conventional floppy disk or CD-ROM or other nonvolatile storage media that may be used to transport computer instructions or data to the system **150.** Computer program product **174** has encoded thereon computer readable program code devices **176,** such as magnetic charges in the case of a floppy disk or optical encodings in the case of a CD-ROM which are encoded as program instructions, data or both to configure the computer system **150** to operate as described below.

In one embodiment, each computer system **150** is a conventional SUN MICROSYSTEMS ULTRA 10 workstation running the SOLARIS operating system commercially available from SUN MICROSYSTEMS, Inc. of Mountain View, California, a PENTIUM-compatible personal computer system such as are available from DELL COMPUTER CORPORATION of Round Rock, Texas running a version of the WINDOWS operating system (such as 95, 98, Me, XP, NT or 2000) commercially available from MICROSOFT Corporation of Redmond Washington or a Macintosh computer system running the MACOS or OPENSTEP operating system commercially available from APPLE COMPUTER CORPORATION of Cupertino, California and the NETSCAPE browser commercially available from NETSCAPE COMMUNICATIONS CORPORATION of Mountain View, California or INTERNET EXPLORER browser commercially available from MICROSOFT above, although other systems may be used.

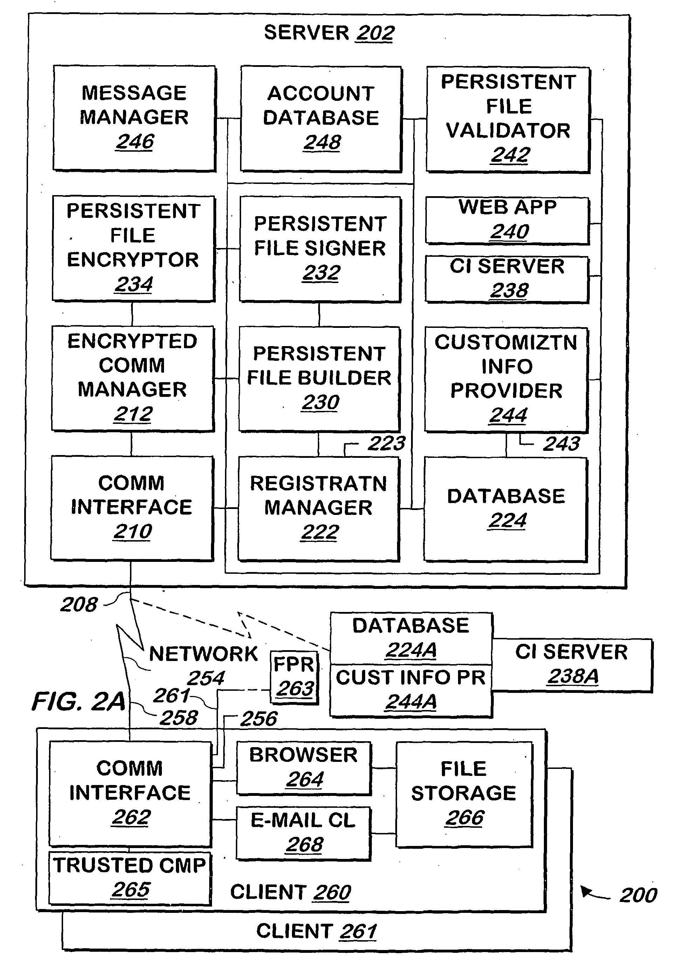

Referring now to Figure **2A****,** a system **200** for allowing a user to authenticate one or more communications from a computer system, and a computer system to authenticate the user is shown according to one embodiment of the present invention. Although both of these functions are described herein, in one embodiment, one of these functions may be used without the other: it is not necessary to employ both functions according to the present invention, although other embodiments employ both functions.

System **200** includes one or more servers and one or more clients, a representative server **202** and client **260** being shown, although multiple clients may access server **202** simultaneously or at different times and multiple servers may be simultaneously used. Server **202** is shown with a superset of components, and there may be multiple servers, each with the superset of components shown or a subset of them.

In one embodiment, all communication into or out of server **202** described herein is made via input/output **208** of communication interface **210** which is coupled to a network **254** such as the Internet or a local area network or both. Communication interface **210** is a conventional communication interface that supports Ethernet, TCP/IP or other conventional communication protocols.

Communication into and out of client **260** is made via input/output **258** of communication interface **262,** which includes a conventional communication interface similar or identical to communication interface **210,** but may also contain conventional circuitry to couple to a conventional keyboard/monitor/mouse (not shown), or other similar conventional input/output device, via input/output **256.** Client computer system **260** may be coupled to network **254** via a modem coupled to input/output **258** that is also part of communication interface **262.**

### Registration

In one embodiment, a registration process is performed to identify customization information for each of many users to allow the user to perceptively authenticate communications from one or more computer systems as described in more detail below. Such perceptive authentication may include anything capable of detection by the user, such as the look of one or more web pages, one or more sounds provided incident thereto, smell, touch, or taste. For example, a photo of the user may appear on an initial web site log on page, and optionally on subsequent pages, or in an e-mail message to indicate to the user that the communication is authentic. A certain text phrase may be used in place of, or in addition to the photo. A sound known to the user may be used in addition to, or in place of, any of these.

The registration process associates an identifier of the user with the customization information that will be provided to the user to allow the user to authenticate communications from a computer system, such as one or more pages of a web site, an e-mail or other communications, as will now be described. In one embodiment, the user provides or selects the customization information, although in another embodiment a system administrator performs this function and then informs the user of the customization information.

In one embodiment, the user uses a conventional browser **264,** communication interface **262** and network **254** to log into the server **202** via a request for a web page received via communication interface **210,** which, based on the port number of the request, is provided to web application **240.** Although browser **264** is used as described herein, other embodiments may employ operating system software, a servlet, or other application software.

Web application **240** redirects the user's browser to a secure sockets layer port on server **202** (or a different server similar or identical to server **202** described herein), and the user's browser **264** resends the request via a secure sockets layer connection, which communication interface **210** provides to encrypted communication manager **212.** Encrypted communication manager **212** uses conventional SSL processing techniques to establish the connection, receive the request and decrypt the request, and provides the decrypted request to web application **240.**

Web application **240** attempts to read a persistent file (e.g. a cookie, Flash local shared object or other similar file) that may have been stored in file storage **266** and, if so stored, was provided to the server **202** by browser **264** as part of the connection. In one embodiment, if the persistent file does not exist (or in another embodiment, in all cases), web application **240** builds a web page (which may also allow the user to log in as described below) that includes a link to a registration page provided by registration manager **222.** If the user clicks the link, the user's browser **264** will request the registration page, which may use the SSL connection described above or a different SSL connection. Communication interface **210** will receive the request and provide it to registration manager **222** via an SSL connection via encrypted communication manager **212** and registration manager **222** provides the page via communication interface **210** and encrypted communication manager **212** which uses the SSL connection.

The user may provide sufficient indicia of the user's identity to indicate that the user is who the user says he is. This process is enforced by registration manager **222** although it may be performed in a wide variety of ways.

In one embodiment, the web page provided by registration manager **222** requires for registration the user identifier and/or password of a person who has verified the identity of the party, which registration manager **222** has previously stored in database **224** so that the provided user identifier and/or password may be compared by registration manager **222** with a set of authorized user identifiers and passwords to determine whether the user had provided sufficient indicia of his identity. In another embodiment, registration manager **222** prompts the user for another set of one or more identifiers that have been provided to the user through out-of-session means, such as mail, fax or telephone, or via another web connection or an e-mail message and that were previously generated and provided to the user by registration manager **222.**

In one embodiment, the web page provided by registration manager **222** prompts the user to select or enter, not only his or her user identifier and optionally a password, but also to enter information that can be verified by a third party, such as the user's name and any or all of 1) a social security number; 2)credit information (e.g. the last few digits of a credit card or other account at a financial institution, or the dollar amount or merchant involved in a recent transaction amount made to such an account), 3)drivers license information or 4) other information that may be verified by a third party and registration manager **222** receives such information via conventional techniques such as CGI. Registration manager **222** communicates with computer or other systems of such third party via communication interface **210** and network **254** to verify some or all of the information provided. If the third party verifies the information provided to it, registration manager **222** considers the user to have provided sufficient indicia of his or her identity, and so registration manager **222** allows the user to continue to register as described herein, and otherwise, registration manager **222** does not allow the user to continue to register.

Depending on the security needs of the web site, the user may provide such sufficient indicia of identity without such other system-provided information. This may be a user identifier and password, but may also be a mother's maiden name, or other information that had been previously collected from the user or another source and stored in database **224.** A challenge and response arrangement may be used in which one or more questions are randomly selected and provided to the user by registration manager **222** and registration manager receives the responses and compares the responses to the questions (e.g. pets name) to a record in database **224** that correspond with a user identifier (and optionally a password) that is also provided by the user to registration manager **222** via the same web page form or a different web page form that is provided by registration manager. In another embodiment, the user identifier or user identifier and password provided by the user to registration manager **222** via a web page form it generates in response to the request may be sufficient indicia of the user's identity.

In still another embodiment, the user need not authenticate himself to registration manager **222** and in such embodiment, sufficient indicia of the user's identity is the fact that the party is connected to the web site at a certain time, from a specific IP or MAC address or otherwise, as detected by registration manager **222** using conventional techniques or such information is used in addition to other information to supply sufficient indicia of the user's identity.

At this point, the user may be considered to have provided sufficient indicia of the user's identity. However, to complete the process of the user supplying sufficient indicia of his or her identity, in one embodiment, it may be desirable for registration manager **222** to supply a password via an out-of-session means, for example, via a telephone connection or e-mail. The user can then enter this password to complete the process of supplying sufficient indicia of the user's identity. An out-of-session means is any communication means other than the one the user is using to communicate with registration manager **222.**

In one embodiment, registration manager **222** registration manager **222** retrieves, from account database **248** in a record corresponding to the user's identifier, an identifier of an out-of-session means of communication (e.g. a telephone number or an e-mail address) that may be used to supply a one time use password to allow the user to further authenticate himself. In another embodiment, registration manager **222** provides, on the same or a different web page described above, a prompt for an identifier of an out-of-session means of communication, and registration manager **222** receives such identifier. Account database **248** is a conventional database holding account information for each of several users.

Registration manager **222** then generates a password, which it provides in an out-of-session manner corresponding to the identifier, either via communication interface **210** or via input/output **223,** which can be used to communicate in the out-of-session method, registration manager **222** containing a suitable interface.

For example, the out-of-session method may be a telephone, with the identifier being a telephone number, the suitable interface in registration manager **222** being a conventional telephony interface and a conventional text-to-speech converter or conventional voice response system.

Registration manager **222** then prompts the user via a web page to enter the password it provided in the out-of-session manner as described above and when the user complies, registration manager **222** receives the password from the user and compares it to the password it provided using the out-of-session means described above. If the two passwords match, registration manager **222** considers the user to have provided a sufficient indicia of the user's identity. If the two passwords do not match, or the user does not provide the password in a sufficient period of time after it has been provided as described above, registration manager **222** does not consider the user to have provided a sufficient indicia of the user's identity and will not allow the user to register customization information as described below. In one embodiment, the password provided in this manner is a one time use password, which registration manager **222** immediately requires the user to change after it has been entered as described above, and stores the changed password in the user's record in account database **248**.

As an example of the above approach, registration manager **222** may prompt the user via encrypted communication manager **212** to provide his or her drivers license number, along with the user's user identifier and an e-mail address. Registration manager **222** receives the user identifier and drivers license number via conventional techniques such as CGI, and retrieves the name and address stored for that user identifier in account database **248,** which may be a conventional database, such name and address being stored previously by a system administrator. Registration manager **222** then provides the name, address and drivers license number to the licensing authority in the state of the user's residence and receives an indication from the state licensing authority that the drivers license number matches the name and address. As a result, registration manager **222** mails a password to the user via the user-supplied e-mail address as a one-time use password and allows the user to continue the registration process as described herein. The user will log in using the password to complete the process of providing a sufficient indicia of the user's identity, and registration manager **222** will then prompt the user to change the password via encrypted communication manager **212,** and will store the new password into account database **248** in the record corresponding to the user identifier.

As noted above, once it receives sufficient indicia of identification from the user, registration manager **222** builds a new record in database **224** and stores the user identifier received as described above in a record for the user in database **224** if the identifier is not already stored in any such record that may already exist for that user.

### The user provides customization information.

After the user has provided sufficient indicia of the user's identity, registration manager **222** prompts the user to select from a predefined list of, or provide, customization information, some or all of which can be presented to the user when the user is requested to provide confidential or other information to a web site or when the user may wish to authenticate a communication, such as an email message, or its source. As noted above, a system administrator can select or provide the customization information for a user in another embodiment.

Customization information may be anything that the user can use to recognize that the web site is authentic. It may be any number of any of the following: a photo, a graphic, a color, a layout, a message, a sound, a smell, or anything that may be sensed by touch. The customization information may be selected from a list or may be original information that is provided by the user who will use it to identify the authenticity of the web site, such as a digital photo of himself. The customization information need not be static: it may be a formula, such as "Today is @date", where "@date" is replaced by that day's date, or "Only (@5May-today) days until your birthday" in which the number of days until the following fifth of May is substituted for "(@5May-Today)" as that user's customization information when such information is provided as described herein.

Registration manager **222** provides a web page to allow the user to select or provide any number of any of the above stems or other similar information and then stores the items or indications of the items in the database record for the user in database **224** which may be a conventional database, and may be the same as account database **248.** In still another embodiment, registration manager **222** generates or selects (i.e. randomly) such customization information and provides it to the user and stores it in the database record in database **224.** The customization information may be provided by registration manager **222** via the web page or out-of-session as described above.

In one embodiment, registration manager **222** provides, or prompts and receives the customization information via encrypted communication manager **212** which initiates and uses a secure communication channel such as SSL-encrypted communications, to provide, or prompt and receive the customization information to prevent others from intercepting the customization information.

**A cookie is encrypted, signed and stored.**

Registration manager 222 also initiates the storage of a signed, encrypted persistent file on the user's computer system. Such storage may be performed at any time after the user has provided the sufficient indicia of the user's identity as described above, and may be performed either before, after or in place of, the identification of customization information described above.

To build and store the persistent file, registration manage 222 provides to persistent file builder 230 the identifier of the user stored in the user's record in database **224** as described above. Persistent file builder **230** includes the user identifier into the persistent file and may add other status information to the persistent file, such as the IP address or MAC address of communication interface 262, which persistent file builder **230** receives from registration manager **222,** or a digital certificate, each described in more detail below, and provides the identifier and the other information to persistent file signer **232,** which signs the persistent file using conventional cryptographic techniques, such as by hashing the identifier, and optionally the other information, using a secret hash key to produce a hash result referred to herein as the persistent file signature. Persistent file signer **232** provides the persistent file signature, identifier and optionally, the other information, collectively referred to as the persistent file, to persistent file encryptor **234,** which encrypts the persistent file using conventional encryption techniques, such as using the public key of a public key/private key pair or using a symmetric key. Persistent file encryptor **234** then causes browser **264** to store the encrypted persistent file in file storage **266** on the user's client computer system **260** via encrypted communication manager **212,** communication interface **210**, network 2**54** and communication interface **262**, optionally using an SSL connection, such as the connection used for registration as described above. File storage **266** may be conventional memory or disk storage and may be a portion thereof used for the storage of persistent files, and may be part of the client computer system **260** or may reside in a removable device such as a smart card, USB memory token (a portable memory device that interfaces to a personal computer through a USB port, such as the USB Memory Key commercially available from Dell Computer Systems of Round Rock, Texas) or the like.

Although a cookie may be used as a persistent file as described herein, other embodiments may employ other types of encrypted files, certificates or other similar data structures. For example, as described in more detail below, a Flash local shared object may be used as a persistent file, for example, by registration manager **222** supplying a Flash movie in the form of a ".swf" file, for example, as part of a web page it supplies. The Flash movie receives information from persistent file encryptor **234** in a form similar or identical to the persistent file described herein, and may store this information as a Flash local shared object into file storage **266.** Flash and local shared objects are described at the web site, Macromedia.com.

In one embodiment, the user's client computer system **260** need not be used for the initial registration. Instead, the registration process may be performed in two parts: the first part allows the user to select customization information as described above from a specific set of browsers with known IP addresses or authenticated using a system administrator user, identifier and password. The second part allows the user to log in using the indicia of the user's identity as described above from his own browser, at which time the encrypted persistent file is placed on the user's client computer system **260.** As described in more detail below, the user may employ other computer systems to authenticate himself or herself to a computer system as described herein.

**Authenticating a Communication from a Computer system and/or the Identity of the User.**

A user may use the present invention to authenticate a communication from a computer system, for example, authenticating a web page provided by server **202,** and the same or a different computer system, such as server **202** may use the present invention to authenticate the user as described herein. For example, subsequent to receiving the persistent file as described above, when the user requests a web page from a web site, the user will use his or her web browser **264** (which, as used herein, may be a conventional web browser or another application program) to send the request to server **202.** The request may be received due to a user entering a URL into a web browser, clicking a link on a web page, e-mail or alert, or due to a redirect command from another web site. Browser **264** sends the request to server **202** via communication interfaces **262** and **210** and network **254.** Communication interface **210** passes the request to web application **240,** which is a conventional web application program, modified to operate as described herein. Web application **240** may authenticate the user, provide customization information to allow the user to authenticate the web site, or both, as will now be described.

To authenticate the user, web application **240** reads the encrypted persistent file provided by browser **264** from file storage **266,** such persistent file being placed in file storage **266** as described herein. Web application **240** passes the encrypted persistent file to persistent file validator **242,** which decrypts the encrypted persistent file, and then separates the signature from the remainder of the persistent file. Persistent file validator **242** verifies that the signature corresponds to the remainder of the persistent file (e.g. by rehashing the remainder of the persistent file using the same hash algorithm and hash key as was used to build the signature, and comparing the hash result to the signature) and either provides web application **240** with the user's identifier and other information that may be stored in the persistent file if persistent file validator **242** authenticates the user via the signature (e.g. the hash result it generates matches the signature), or indicates that the persistent file is not valid (e.g. if the hash result persistent file validator **242** generates does not match the signature).

In one embodiment, during the registration process described above, registration manager **222** prompts the user to identify whether the user's computer system accesses the internet via a method associated with a static IP address, for example, via DSL or a cable modem. If the user so indicates, registration manager **222** provides the IP address (or unconditionally provides the MAC address) of communication interface **262** to persistent file builder **230,** which includes in the signed, encrypted persistent file the user's IP address (or MAC address) or an indication that the IP address is not static. In this embodiment, web application **240** also provides to persistent file validator **242** the source IP address contained in the request. If the persistent file indicates that the persistent file contains a static IP address, if the source IP address of the user's request received (or MAC address) does not match the IP address (or MAC address) in the persistent file, persistent file validator **242** indicates the persistent file is not valid, even if the user identifiers and signature matches as described above.

In one embodiment, persistent file validator **242** also requires that the persistent file have a valid digital certificate, which persistent file validator **242** validates using conventional techniques. If the digital certificate is not valid, persistent file validator **242** indicates the persistent file is not valid, even if the other validity tests pass as described above. The digital certificate may be provided to persistent file builder **230** by registration manager **222** during the registration process described above, for inclusion into the signed, encrypted persistent file.

If persistent file validator **242** indicates the persistent file is not valid, web application **240** may deny access to some or all of the web site. Otherwise, web application **240** receives the user identifier and uses the user identifier to operate web application **240** and/or provide customization information, selected as described herein, to the user.

In one embodiment, web application compares **240** compares the user identifier received from the user with one received from persistent file validator **242.** If the user identifiers match, web application **240** provides the requested web page with the customization information as described herein. If the user identifiers do not match, web application **240** denies access to the requested web page and customization information. In one embodiment, the user will also use browser **264** to enter a password, either at the same time as the user enters the user identifier as described above, or at a later time as described in more detail below. In one embodiment, web application **240** also compares the password to a password for that user identifier stored in account storage **248,** and denies access to the requested web page and the customization information if the password received from the user does not match that stored for the user identifier.

Customization information may be provided with every web page provided by web application **240,** some web pages, with web pages that are displayed to provide confidential information to the user, with web pages used to request any information from the user, or with web pages that are used to request confidential information from the user or any combination of some or all of these. Confidential information may include information that can be used to gain access to financial or other resources of the operator of the web site or the user (e.g. the password described above), or other information that a user may not wish others to know.

Customization information may be provided as part of web pages described above, or it may be provided separately. To provide customization information with any of the web pages described above, web application **240** provides to customization information provider **244** the user identifier received as described above and the contents of a web page that has the customization information omitted, optionally with one or more indications in the web page that describe how and where to insert the customization information into the web page, along with the user's IP address and other information that can be used to address the web page.

In one embodiment, customization information provider **244** retrieves from database **224** the customization information stored in the record corresponding to the user identifier, and provides the customization information, for example by adding it to the web page it receives from web application **240** in accordance with instructions received with, or as part of the web page or by providing it at a certain place in the web page or at multiple places, such as at or near the four corners of the web page, and provides to the user the customization information with any web page it receives using the user's IP address it receives. The customization information may be incorporated into the web page, or provided by customization information provider **244** via a one or more tags or links or contained in computer code, such as a Flash movie or Javascript applet. The tags or links identify the customization information to be provided, and may identify a server, such as server **202,** which can provide the customization information in response to a request made by browser **264** attempting to display the information corresponding to the one or more tags or links, as described in more detail below. In one embodiment, customization information provider **244** generates, and then associates, with the customization information for the user in database **224**, an identifier contained in part of the one or more tags or links, which, as described in more detail below, customization information server **238** uses to fulfill any requests for the customization information. The tags, links or computer code provided by customization information provider **244** are built to contain this same code. The customization information or pages with references thereto may be provided via a secure connection provided by encrypted communication manager **212** or out-of-session as described below.

In one embodiment, the customization information may be provided by customization information provider **244** out-of-session, such as by calling the user's mobile telephone and instructing the user that the web page is authentic by playing a recording of the user's voice, a favorite song, a prerecorded message or otherwise. The out-of-session customization information can be provided via output **243,** which may be coupled to a conventional telephone line, with customization information provider **244** containing a suitable interface.

If customization information provider **244** provides the customization information via one or more tags, links, or code, the user's browser **264** will attempt to render the customization information to the user by sending a request corresponding to each instance of the customization information encoded in the one or more tags, links or codes. The request will contain an address of customization information server **238**, as well as the code that identifies the specific customization information to be provided to that user. The code may be embedded in the link as a parameter, filename or otherwise, and such code is sent with the request by browser **264.** Customization information server **238** receives the request and uses the code by searching database **224** to locate the customization information corresponding to the code. Customization information server **238** then provides the customization information corresponding to the code to browser **264**, which displays it to the user as described herein. Customization information server **238** may provide all customization information it provides as described herein either directly via communication interface **210** or also via encrypted communication manager **212,** which provides such information via communication interface using an encrypted SSL session. As described in more detail below, customization information server **238** may authenticate the user by using the persistent file before providing such customization information in order to help prevent the disclosure of any customization information to a party other than the user. However, if the code that corresponds to the customization information is unrelated to the user's user identifier and the customization information itself will not disclose the identity of the user, the risk of any such disclosure may be slight.

When the user receives the customization information such as via browser **264** and a monitor coupled to input/output **256** or out-of-session, the user may use it to authenticate the web site, and withhold providing information, such as confidential information, or refrain from using the web site if the customization is missing or different from the customization information the user selected or provided as described above. If the customization information is what was registered or otherwise expected as described herein, the user may provide confidential information via web pages provided by web application **240,** believe information received therefrom, or both.

Although customization information is described herein as having a single instance for each user, multiple, different instances of customization information may be registered for each of some or all of the users, with each instance of customization information having a different meaning, e.g. one instance may mean that it is OK for the user to provide secure information, and a different instance of customization information for the same user to mean that information on the page has been validated as having been provided from an authentic source. Association of each instance of the customization information with the identifier of the user can be performed as described herein, along with an identifier of the instance, and each instance of customization information for a user may be perceptively different from the other instances for that user. Web application **240** then provides to customization information provider **244** the identifier of the user and an identifier of the instance of customization information that should be provided, and customization information provider **244** uses the identifier of the user and the identifier of the instance to retrieve and provide to the user the proper instance of customization information or a reference thereto in the same manner as was described above for the single instance of customization information for each user.

### The User May be Pre-Confirmed

The user may not wish for his customization information to be provided when the user uses browser **264** to navigate to the site to a page that requires the user to provide confidential information, so as not to provide the customization information to anyone who merely has physical access to his or her client computer **260** and who navigates to the site. Thus, in one embodiment, customization information is not provided until the user provides a valid user identifier to web application **240.**

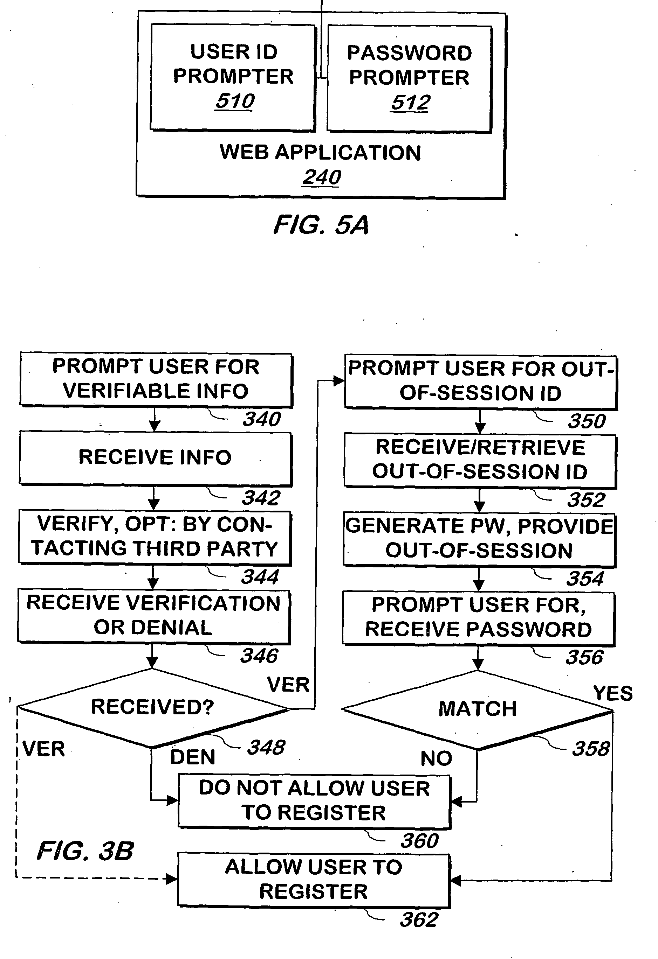

Figure **5A** illustrates web application **240** in more detail according to one embodiment of the present invention. Referring now to Figures **2A** and **5A****,** in such embodiment, when the user uses browser **264** to navigate to the web site operated by web application **240,** user name prompter **510** of web application **240** provides to browser **264** a web page that requests the user's user identifier, but not the user's password or other confidential information. The user's customization information is not supplied to browser **264** with this page. The user uses browser **264** to supply the user identifier to web application **240**. User identifier prompter **510** of web application **240** reads the user identifier via conventional techniques, such as CGI, and restricts the encrypted persistent file.

User identifier prompter **510** passes the encrypted persistent file, and optionally, the IP or MAC address of the user, to persistent file validator **242,** which validates the persistent file, which optionally includes validating the IP or MAC address and/or certificate as described above. Persistent file validator **242** verifies that the signature corresponds to the remainder of the persistent file (e.g. by rehashing the remainder of the persistent file using the same hash algorithm and hash key as was used to build the signature, and comparing the hash result to the signature) and either indicates that the persistent file is valid, or indicates that the persistent file is not valid (e.g. if the hash result persistent file validator **242** generates does not match the signature or, optionally, if the IP or MAC address received from user identifier prompter **510** does not match the IP or MAC address stored in the persistent file, if such IP address is indicated as being static or if the certificate cannot be properly authenticated using conventional techniques). Persistent file validator **242** provides user identifier prompter **510** with the user's identifier from the persistent file and other information that may be stored in persistent file if persistent file validator **242** authenticates the user via the signature (e.g. the hash result it generates matches the signature and optionally, the IP or MAC address matches and/or certificate is authenticated).

If persistent file validator **242** indicates the persistent file is not valid, user identifier prompter **510** may deny access to some or all of the web site, including the requested web page. Otherwise, user identifier prompter **510** receives the user identifier from persistent file validator **242** and compares the user-supplied user identifier to the user identifier received from persistent file validator **242** and if the two user identifiers don't match, user identifier prompter **510** may deny access to some or all of the web site.

If the user identifiers match, or if the matching is not performed, after receiving the indication that the persistent file is valid, user identifier prompter **510** signals password prompter **512** and provides the user identifier of the user it received. When signaled, password prompter **512** provides the user identifier and a web page that prompts the user for a password, to customization information provider **244** as described above. Customization information provider **244** uses the user identifier to request the customization information from customization information database **224** as described above and provides to browser **264** the customization information received, either directly, out-of-session, or via one or more links, tags or code as described above, and the web page containing the prompt for the password or other confidential information.

The user can use the customization information thus received to authenticate the web site requesting the confidential information (i.e. the password), and either provide the confidential information such as the password, or not provide such confidential information, based on whether the user believes the customization information corresponds to that which is expected from the web site. If the user so believes, the user provides via browser **264** the password, and password prompter **512** receives it using conventional techniques, such as CGI, and validates it using conventional techniques, such as by comparing it to a stored password or account database **248** for the user identifier received as described above. If the password matches, password prompter **512** allows access to some or all of the remainder of the web site, including a requested web page.

### User May Use An Alternate Computer System: Roaming

In one embodiment, a user may initially register using one client computer system **261** and then attempt to use server **202** using a different client computer system **260.** Figure **2A** shows client computer system **261,** which contains elements similar to or identical to elements **262-268** of client computer system **260.** If the user uses client computer system **261** to initially register as described above, and then attempts to use client computer system **260** to request information from web application **240** as described above, the persistent file will not be present in file storage **266,** it having been stored in the file storage of client computer system **261** when the user registered as described above. As a result, the user will not be allowed to log in, will not be allowed to see the customization information, or both, as described above.

In such embodiment, web application **240** prompts the user to identify that the user wishes to arrange roaming from the client computer system **260** the user is using to log in. This may be performed via a check box on the page that the user uses to supply his or her user identifier as described above, or may be automatically performed if web application **240** is unable to locate a persistent file for use as described above. If the user or web application **240** so identifies, web application **240** redirects the user to a web page provided by registration manager **222.**

Registration manager **222** provides a web page that allows the user to register as described herein, or to allow roaming from the computer system **260** being used by the already-registered user. The user may attempt to register as described herein, or provide his or her user identifier (or the user identifier may be received by registration manager **222** as part of the redirect command) and indicate that roaming is desired (or such status may be received by registration manager **222** as indicated by registration and roaming checkboxes that were displayed on the web page initially provided by web application **240,** which web application **240** receives via conventional CGI techniques and provides to registration manager **222,** for example via parameters in the redirect command).

If registration manager **222** prompts the user for the user identifier and/or password (as opposed to receiving the user identifier from web application **240**), registration manager **222** prompts the user via one or more web pages using any of the techniques described herein for -prompting for such information, including providing customization information on the web page with the prompt, and/or splitting the prompts into two web pages, one requesting a user identifier and not displaying the customization information, and a second requesting the user's password and displaying the customization information. If registration manager **222** receives the password from web application **240,** in one embodiment registration manager **222** may prompt the user for a password via customization information provider **244** to display the customization information. In another embodiment, the user is not prompted for his password.

If roaming is desired, in one embodiment, the user may indicate one of the following via the web page provided by registration manager **222:** A) that the computer system from which the user is roaming should be "assigned" to that user (e.g. so that server **202** can authenticate the user from that computer system) indefinitely, B) that the computer system from which the user is roaming should be assigned to that user for a certain period of time indicated by the user, or C) that the computer system from which roaming is desired should be assigned to the user only for that session.

In the case in which roaming is desired, registration manager **222** receives the indication and the user identifier (and optionally, the password, received from a web page on which the user's customization information may be provided as described above), and responsive to the indication and the password corresponding to the password for the user identifier as stored in account database **248,** generates an alternate password that may be used by the user that will authenticate the user to registration manager **222.** In one embodiment, the alternate password generated is different from the user's regular password.

Registration manager **222** provides the alternate password it generates to the user via an out-of-session communication means, such as transmission to an e-mail address, telephone, PDA or other device having an identifier (e.g. an e-mail address or telephone number) that is stored for that user in an account record stored by registration manager **222** or in account storage **248.** The out-of-session identifier may be provided to registration manager **222** in advance by a system administrator or by the user during the initial registration process described herein. Alternately, the user may provide the out-of-session identifier and other information that can be used to authenticate the user, such as information that can be verified, such as a driver's license number or the like, which registration manager **222** validates as described above. All such information may be received via an SSL connection handled by encrypted communication manager **212.**

Registration manager **222** optionally provides a web page notifying the user that the alternate password is available for retrieval via the out-of-session means. Registration manager **222** may do this for certain types of out-of-session identifiers, for example e-mail addresses, but not for others, for example, telephone numbers. The user retrieves the alternate password and registration manager **222** prompts, via a web page, the user for the alternate password it provided. The user supplies the alternate password and registration manager **222** receives it, for example, using conventional CGI techniques.

If the password received by registration manager **222** does not match the password it generated, or no such password is received, registration manager **222** will not take the further actions described below. If the password received by registration manager **222** matches the alternate password it generated for that user, registration manager **222** performs one of two actions, depending on whether the user indicated that the computer system being used by the user should be assigned to that user.

If the user indicated that the computer system being used by the user should be assigned to that user indefinitely, registration manager **222** provides via persistent file builder **230,** persistent file signer **232** and persistent file encryptor **234,** and encrypted communication manager **212** as described above to browser **264** a copy of the persistent file that was provided to the client original computer system **261** when the user registered as described above. Browser **264** receives the persistent file via an SSL connection and stores it into file storage **266** as described above. As described herein, other types of persistent files, such as Flash local shared objects containing information similar or identical to the persistent files described herein may be stored into file storage **266,** for example via a Flash movie provided to browser **264** by registration manager **222.** Registration manager **222** either instructs the user to attempt to log in again, or redirects the user's browser **264** to the log in page from which the user had been redirected to registration manager **222,** registration manager **222** having stored the address of the web page when the user was redirected, the address optionally having been provided as a parameter of the redirect to registration manager **222.**

In one embodiment, before building and storing the persistent file as described above, registration manager **222** will attempt to read any existing persistent file stored on the client computer system for that web site. If such a persistent file exists, registration manager **222** then sends it to persistent file builder **230,** which generates a combined persistent file containing the information from the persistent file it retrieved and the information for the roaming user, and provides the persistent file for storage on the client computer system **260** as described above. In one embodiment, when generating such a combined persistent file, registration manager **222** removes information from the retrieved persistent file having an expiration date and time that is prior to the current date and time, which registration manager **222** requests from the operating system (not shown).

In another embodiment, instead of registration manager **222** reading the persistent file and storing the persistent file or combined persistent file, registration manager **222** passes to web application **240** information (e.g. as one or more parameters, which may be encrypted) that can be used to generate the persistent file, and web application **240** attempts to read the persistent file, and sends the information to persistent file builder **230** builds the persistent file or combined persistent file and causes it to be stored in file storage **266** as described above instead of registration manager **222** initiating this process as described above.

If the user did not indicate that the client computer system **260** being used by the user should be assigned to that user indefinitely, if the user indicated that the computer system from which roaming was desired should be assigned to the user only for that session, or for a limited period of time, in one embodiment, registration manager **222** either sends information to persistent file builder **230,** which encodes these limitations into the persistent file or stores them into the user's record in account database **248** as described in more detail below. For example, to encode the limitations into the persistent file, registration manager **222** may set in the persistent file a "number of uses remaining" counter to 1, or retrieve from an operating system a current date and time and add the duration specified by the user on the web page the user used to indicate that the computer system **260** should be assigned to the user for a limited period of time, to produce an expiration time, and including the expiration time into the persistent file. Registration manager **222** initiates the sending of the persistent file to browser **264** for storage and use as described above.

In a similar manner to that described above, before storing any such restricted persistent file onto computer system **260,** registration manager **222** may attempt to read any existing persistent file for the web site corresponding to registration manager, and cause persistent file builder **230,** persistent file signer **232,** persistent file encryptor **234** and encrypted communication manager **212** to build and store on client computer system **260** a combined persistent file if the client computer system contains an existing persistent file for that web site, as described above. Also as described above, registration manager **222** may provide the information to be added to the persistent file to web application **240,** which may attempt to read any existing persistent file and initiate the storage of the persistent file or combined persistent file onto the client computer system **260** instead of registration manager **222** performing all of these functions.

Web application **240** enforces the limitations placed on the persistent file when the user attempts to log in. For example, web application **240** retrieves the date and time from the operating system clock (not shown) and compares it to the expiration date and time in the persistent file if the persistent file has such an expiration date and time. If the date and time from the system clock is later than the expiration date and time in the persistent file, web application **240** will not allow the user to log in as described above.

Regarding the one time use, in one embodiment, when the user logs in, web application **240** stores the signature or a serial number of the persistent file or other signature in the record holding that user's account number in account database **248** if the persistent file is marked for a one time use. If the user or another party attempts to log in, web application **240** compares the signature or serial number to those stored for that user, and does not allow the user to log in if the signature in the persistent file matches one of those stored for that user. In one embodiment, persistent files that are designated as one time use also have an expiration date and time that may be stored with the persistent file, using a default period such as a week from the date and time the persistent file is generated. Web application **240** first checks the expiration date and time as described above and then verifies the persistent file has not been used before as described above. This allows signatures stored for a user to be purged from account database **248** after the default period.

In still other embodiments the limitations placed on the use of client computer system **260** are enforced using other means. For example, the expiration date and time and a serial number of the persistent file may be stored by registration manager **222** in account storage **248** instead of storing the expiration date and time in the persistent file. In such embodiment, each user's persistent files are assigned a serial number unique to that user, and the serial number is stored in the persistent file, and hashed as part of the persistent file's signature. When the user attempts to use the persistent file, web application **240** retrieves the serial number from the persistent file via persistent file validator **242** and then looks up the expiration date and time corresponding to the user and serial number of the persistent file in account storage **248** and retrieves the current date and time from the system clock. If the current date and time from the system clock is later than the expiration date and time for the persistent file, or no entry is stored for that user and that serial number, web application **240** does not allow the user to log in or otherwise treats the persistent file as invalid, and if the entry exists but the current date and time is after the expiration date and time stored for that user and that serial number, web application **240** removes from account database **248** the entry containing the serial number and expiration date and time for that persistent file for that user.

### Prevention of Keystroke Capture

In one embodiment, to guard against keystroke capture programs that may be installed on computer systems, and that would allow an intruder to surreptitiously capture the user identifier and password of a user who is roaming on a computer system over which that user may not have control, in one embodiment, the alternate password may be stored in the user record corresponding to the user identifier in account database by registration manager **222** when it provides it to the user as described above. The user may use this password instead of his or her regular password when using a persistent file for roaming as described above. Web application **240** prompts the user for his or her alternate password, and warns the user not to use his or her regular password when web application **240** detects a persistent file marked as one time use or limited duration use as described above. Web application then uses the alternate password stored in account database **248** instead of the user's regular password when comparing a password supplied by the user as described above.

In still another embodiment, web application **240** supplies a different alternate password via the out-of-channel communication method described above each time the user attempts to log in by supplying a user identifier and web application **240** detects an unexpired limited duration persistent file on the computer system **260.** Web application **240** then prompts the user for his or her password by instructing the user to retrieve it from the out-of-channel communication method and again warns the user not to use his or her regular password. Web application **240** then matches the password supplied by the user to the new alternate password whenever the user attempts to log in using this method.

In one embodiment, registration manager **222** prompts the user to select any one of the above methods based on the user's trust of the computer system **260,** and registration manager **222** records the user's record in account storage **248** with the type of method the user has selected and the serial number of the persistent file. Web application **240** then performs the method described above based on the stored type for the record in account storage **240** corresponding to the user identifier whenever it detects the serial number of the persistent file described above.

### Roaming Without Customization Information

In one embodiment, it isn't necessary for the user to register to receive one of the various types of persistent files described above when the user registers on a client computer system **261** and then attempts to log in using a different client computer system **260** that does not have a stored persistent file.

For example if desired, the user can simply use client computer system **260** without any persistent files. The user can view web pages or other communications as described herein, but will not see that user's customization information displayed with such communications. As described in more detail below, when viewing communications in this manner, if a password is required, the user may obtain, and web application **240** will compare, an alternate password, such as a one-time-use password, to prevent the user's regular password from being recorded by keystroke logging programs as described above, or the user can continue to use his or her regular password.

For example, if web application **240** is not able to detect a persistent file, or the persistent file it detects does not correspond to the user identifier, to respond to the first request for a web page from such a user during a single session, web application **240** may provide a web page that instructs the user that customization information is not available from this computer system **260,** warning the user that while using this computer system without registering it, links to this web site should always be typed, and not followed or pasted, and containing a link to registration manager **222** to allow the user to request a roaming persistent file as described above and a link to allow the user to continue without viewing customization information. If the user clicks the link to registration manager **222,** operation continues as described above to allow the computer system **260** to be registered and receive a persistent file as described above.

If the user elects to continue without viewing customization information, web application **240** will allow the user to log in and view web pages using a user identifier and password. However, when web application sends the web page to customization information provider **244,** it provides a special user identifier that is different from the actual user identifier of the user that indicates that the user's customization information should not be shown (and that neither customization information provider **244** nor customization information server **238** should attempt to authenticate the user in the embodiments in which they attempt to do that using the persistent file). Customization information provider **244** provides a message in place of the user's customization information, either by including the message into the web page, or including one or more links, tags or computer code containing a reference to customization information server **238.** The code that would be included that identifies the user's customization information is replaced by customization information provider **244** with a code to a predefined message in database **224,** instructing the user that the computer system **260** from which the user is requesting web pages is not registered, and reminding that user to be more careful when using such a computer, such as by not following or copying links to this web site, instead typing URLs into the browser directly. If the user's browser will send one or more requests to customization information server **238** as described above, customization information server **238** will provide that message in place of the user's customization information for each such request.

In one embodiment, before displaying a page requesting a password in this manner, web application **240** may first provide to the user an additional web page containing the warnings described above, with a link to registration manager **222** to allow the user to obtain a one-time-use password before it prompts the user to provide his or her password as described above, to ensure that the user sees the message.

If the user clicks the links to registration manager described above, registration manager **222** generates, stores in account database **248** and provides to the user an alternate password via the user's out of channel identifier stored for that user in account database **248.** Registration manager **222** then provides a web page instructing the user to retrieve the alternate password and a link back to web application **240** for the user to complete the log in sequence. Web application **240** authenticates the user using the alternate password and if the password provided by the user matches the alternate password stored, web application **240** continues to provide access to the web site, and continues to display some or all web pages with the warning instead of the user's customization information as described above, and web application removes the alternate password from the user's record in account database **248.** If the password provided by the user does not match the alternate password stored, web application **240** denies access to some or all of the web site, including any requested pages.

### Database May be Centralized

In one embodiment, database **224** does not reside in server **202** but instead is replaced by database **224A** that is accessible to more than one server **202** via network **254** and otherwise operates as database **224.** Each such more than one server may serve the same web site as server **202** or a different web site. In such embodiment, there is more than one server 202 and either each server registers users and provides customization information as described above, but shares the central database **224A** in place of database **224,** or only a fraction of the servers **202** register users, with other servers making use of the customization information the users identify or provide to such registering server or that is provided by such registering server as described above.

In one embodiment, each server **202** uses a number that is unique among the various servers for the same user, such as a web site number or server number appended to a user identifier, such as a social security number of the user, to access a user's record in database **224A.** In such embodiment, customization information provider **244A** and customization information server **238A** that are accessible to multiple servers **202** may be used in place of customization information provider **244** and customization information server **238** so that any server **202** does not have access to the customization information of the user. Customization information provider **244A** and customization information server **238A** operate in the same manner as customization information provider **244** and customization information server **238** to send to the user the customization information with the web page. Customization information server **238A** may contain its own encryption capability similar to encrypted communication manager **212** so that customization information may be sent via an encrypted SSL session, and each of database **224A,** customization information provider **244A** and customization information server **238A** may be coupled to network via a communication interface (not shown) similar or identical to communication interface **210.**

In one embodiment, either database **224A** or customization information provider **244A** or customization information server **238A,** and web application **240** or customization information provider **244,** use conventional authentication techniques to authenticate requests for customization information or requests to send a web page with customization information. Such authentication techniques may include passwords, signatures, digital certificates or other conventional techniques. Such requests may be sent via encrypted communication manager **212** so that conventional SSL connections may be used to enhance security.

**E-mail Messages May Cause Customization Information To Be Displayed to Allow the User to Authenticate the E-mail Message.**

The system of Figure **2A** may be employed to allow a user to authenticate an e-mail message. In one embodiment, the message may contain HTML code that causes the user's customization information to be displayed as described in more detail below. The customization information may be displayed as part of the e-mail message, or when the user clicks on or pastes into his or her browser a link that is supplied with the e-mail message. As noted above, the user identifier, password and other account information that is described above as being stored by web application **240** is stored in account database **248.** In addition, account database **248** contains an e-mail address for each user of system **200,** of which there may be as many as several million. The e-mail address may be supplied by a user, for example, during the registration process described herein, received by registration manger **222,** which stores it into account database **248,** or a system administrator may store the user's e-mail address into account database **248** using any conventional data transfer technique.

Message manager **246** prepares a message containing information for each of multiple users, and each such message may contain common information as well as custom information prepared for that user or for each user in a group of users. The message may be in the form of an e-mail message, or may just contain the body of the message, such body to be incorporated into a complete e-mail message by customization information provider **244.** In one embodiment, the message is coded as an HTML e-mail message or its body. Message manager **246** passes the message, the e-mail address to which the message is to be sent if the message is not coded as an e-mail address, and the user identifier of the user to which the message is being sent, to customization information provider **244.**

Customization information provider **244** retrieves the customization information associated with the user identifier and adds it to the message. Customization information provider **244** may provide the customization information in the form of text, a link, or one or more tags (e.g. an IMG tag) or any or all of these, with the link, or each such tag containing a link that relates back to customization information server **238** and will cause customization information server **238** to provide the user's customization information (e.g. using a code stored associated with the user's customization information), optionally via a secure session using encrypted communication manager **212.** Customization information provider **244** may include in the message Flash, Java, Javascript, or other computer code that causes the customization information to be displayed, or customization information server **238** may provide such computer code in response to a request resulting from each of the one or more tags or the link.

If a link, or one or more tags or computer code is used, customization information provider **244** assigns in database **224** a code to the link or each link in the one or more tags or the code that can be used to identify the user. For example, customization information provider **244** may select a 35 character identifier that is unique to the user identifier, and store the 35 character identifier associated with the user identifier in database **224** and also store the 35 character identifier in the link, one or more tags, or code for example, as a filename or a parameter in a reference (e.g. a URL) to customization information server **238.**

In one embodiment, customization information provider **244** builds the message it receives into an e-mail message if the message it receives is not already in such format. To address the message, customization information provider **244** uses the e-mail address supplied by message manager **246** or retrieves the e-mail address from account database **248** in the record corresponding to the user identifier it received. In one embodiment, the message is built into an HTML e-mail or a text e-mail, based on a setting received from the user during the registration process and stored by registration manager **222** in account database **248.**

Customization information provider **244** provides the e-mail message to communication interface **210,** which forwards it via network **254** to the appropriate e-mail server (not shown) corresponding the e-mail address of the message. The user uses e-mail client **268** to retrieve the message and view the message via input/output **256** of communication interface **262.** The message may contain the customization information as text, as a link, or as one or more tags containing links, or code (e.g. Javascript or Java) or code plus one or more links. E-mail client **268** may display the message and operate any code and retrieve and display the customization information specified by the one or more links (either as links, tags or code) via one or more requests passed to communication interfaces **262, 210.** Communication interface **210** forwards the request to customization information server **238.**

As described above, the request contains coded information from the link (e.g. the 35 character identifier) corresponding to the user's account number, which customization information server **238** uses to retrieve from database **224** the customization information for the user. Customization information server **238** then provides the customization information via encrypted communication manager **212** and communication interfaces **210, 262** to e-mail client **268.** E-mail client **268** displays the customization information with the message as described above.

If e-mail client cannot display the customization information, the user may click on the link contained in the message, which causes browser **264** to be started if it is not already running and to generate a request based on the link as described above. Alternatively, the user may paste the link into browser **264,** which generates the request based on the link as described above and displays the customization information received in response thereto.

The user may then use the customization information to determine whether the e-mail message is authentic. If the customization information matches that expected by the user, the user can take actions appropriate with an authentic e-mail message, such as believing its contents or clicking on links it contains. If the customization information does not match that expected by the user, the user can take actions appropriate to an unauthentic message, such as deleting the message or refraining from believing its contents or clicking on a link contained therein.

In one embodiment described in more detail below, message manager **246** or customization information provider **244** codes the message as a multi part MIME message, with customization information provider **244** adding the one or more tags or code to an HTML-encoded part of the message and one or more links to the text-encoded alternate part of the message.

In one embodiment, when customization information server **238** receives the request, it also receives the persistent file stored in file storage **266.** Customization information server **238** validates the persistent file (which it may do via persistent file validator **242**) and compares certain information in the persistent file with other information, such as information stored in database **224** or account database **248** and provides or does not provide the customization information based on the result of the comparison. For example, customization information server **238** may verify that the account number in the persistent file matches that to which the code in the request corresponds. If the account numbers do not match, customization information server **238** does not respond to the request as described above, and if the account numbers do match, customization information server **238** responds to the request as described above.

In one embodiment, an indicator as to whether customization information server **238** should use the persistent file as described above is stored in database **224** or account database **248.** Customization information server **238** checks the entry in the database **224** or **248** corresponding to the coded information in the link for whether it should use the persistent file as described above. If the persistent file is not received, but the indicator indicates that the persistent file is required, customization information server **238** does not provide the customization information.

The indicator may be placed in database **224** or account database **248** by a system administrator, or by registration manager **222** which may ask the user if their e-mail client is of a type that supports cookies. Registration manager **222** may attempt to store the cookie as part of the registration process for use as described herein, even if the user's e-mail client does not support the use of cookies.

In another embodiment, the indicator is initialized in database **224** or account database **248** as described above, or initialized to not require the persistent file when the user registers. Customization information server **238** changes the indicator in database **224** or database **248** to require the persistent file upon receipt of the proper persistent file in response to a request generated in response to an e-mail as described above. In this manner, if the user upgrades his or her e-mail client 268 after registration, it will be detected and required from then on.

### Authenticating Text E-mails

As noted above, if the user's e-mail client **268** does not support HTML e-mail, a link may be used to allow the user to authenticate the message using browser **264.** In such embodiment, when customization information provider **244** receives the message from message manager **246**, customization information provider **244** may place both the one or more tags described above and a link into the message. The link may correspond to a web page and may also contain the coded information described above that can allow customization information server **238** to identify the customization information as described above. In such embodiment, the code for the link to allow browser **264** to authenticate the message may be the same code as is used in the tag or computer code or a different code (which customization information provider 2**44** stores in database **224** associated with the user identifier it receives from message manager **246** as described above) and the link may be the same or a different link as is used in the one or more tags or computer code.

In one embodiment, the message received from message manager **246** contains two communications in each of two parts. One part contains the communication encoded as an HTML e-mail and the other part contains the same or a different communication encoded as a text e-mail. Customization information provider **244** adds the one or more tags to the first part and the link to the second part. The two parts are then transmitted as a single e-mail message, with the first part encoded as an HTML e-mail message and the second part used as an alternate encoding, encoded as text e-mail. The message may be encoded as a multi-part MIME message, or using any other conventional e-mail encoding.

In another embodiment, the message contains only the second part, and not the first part, described above. Message manager **246** may generate only the second part of the message in response to a field in account database **248** for each user that indicates whether the user's e-mail client **268** can handle HTML e-mail, specified by the user upon registration as described above. If the field for a user in account database **248** indicates that the e-mail client **268** cannot handle HTML e-mail, message manager **244** generates only the second part of the message and omits the first part as described above. Customization information provider **244** provides the link, but not the one or more tags, in such message.

When the user views the message, the user's e-mail client **268** will display one part or the other if both parts are provided, or the second part if only that part is provided. If the user's e-mail client **268** only displays the text part, or if only the text part is provided in the message, the link will be displayed along with the rest of the message. The user can click on the link or paste it into browser **264 ,** which causes the user's browser **264** to start and to generate a request corresponding to the link (or the user can start browser **264** and cut and paste the link into the browser thereby causing the browser to generate the request.

Browser **264** sends the request via communication interfaces **262, 210.** Communication interface **210** forwards the request to customization information server **238.** The request will have the coded information from the link contained therein, and customization information server **238** uses the coded information to locate the customization information in database **224** as described above. Customization information server **238** provides the user's customization information as described above in response to the request, via encrypted communication manager **212,** and communication interfaces **210, 262.** Communication interface **262** forwards the response to browser **264,** which displays the customization information. In one embodiment, other information in the link (such other information not being a part of the one or more tags described above) causes customization information server **238** to include the customization information it retrieves as described above as part of a web page containing other information, to provide a more elegant user interface when the link is used instead of the tags or computer code.

The user can then use the response to the request to determine whether the original e-mail message was authentic. If the customization information is received as expected, the user can treat the message as authentic, for example by believing information contained therein or linked thereto, or by clicking on links contained therein or linked thereto. If the customization information is not provided as expected, the user can treat the message as not authentic, for example, by disregarding the information contained therein or linked thereto, or by not clicking on a link contained therein or linked thereto, or by discarding the message.

### Flash

In one embodiment, computer code provided with the e-mail may include a conventional Flash .swf movie file or other similar computer code. The computer code may display the remainder of the message, the customization information, or both. In such embodiment, the message generated by message manager **246** may contain a flash movie file, or a reference thereto (such as via an OBJECT or EMBED tag, which may be specified via Javascript code) to be displayed to the user by the user's e-mail client **268** or browser **264** in addition to, or in place of, the remainder of the message. In one embodiment, rather than including the computer code into the message, customization information provider **244** provides a reference to the computer code, which it stores in database **248.** The reference may be a conventional OBJECT or EMBED tag with a link containing the code that identifies the record in database **224** in which the computer code is stored.

The code may be executed by e-mail client **268** or by browser **264** when the user attempts to read the message. Although the code may be contained in the message in one embodiment, in another embodiment, when the user's e-mail client **268** or browser **264** requests the object specified in the OBJECT or EMBED tag, customization information server **238** retrieves the code from database **224** or builds the code (e.g. a .swf file containing the customization information) and provides it in response to the request.

As noted above, in other embodiments, the .swf file is generated in advance of the request and stored in database **224,** either by customization information provider **244** using the customization information for the user identifier it receives from message manager **246** at the time it adds the customization information to the message as described above, or by registration manager **222** after the customization information is received during the registration process.

In one embodiment, the persistent file is used as described herein. In another embodiment, instead of a persistent file or in addition to it, either the .swf file itself contains encrypted information that would have been encoded into the persistent file, or registration manager **222** builds via persistent file builder **230,** persistent file signer **232** and persistent file encryptor **234,** and instructs the user's browser **264** to store via an SSL connection provided by encrypted communication manager **212,** a Flash local shared object in file storage **266,** as the persistent file. Instead of using a cookie as the persistent file, web application **240** receives the information encoded into the .swf file by the Flash movie, or the Flash movie retrieves and provides to web application **240** information from the Flash local shared object stored in file storage **266** and web application **240** provides it to persistent file validator **242,** which processes it in the same manner as it processed the cookie as described above. Other elements may employ other types of persistent files to serve the role of the cookie in a similar manner.

In one embodiment, in the manner similar to that described above, before the customization information is provided for display to the user by the Flash movie or other similar code, the user may first enter a user identifier, or the Flash movie may obtain it without user interaction by retrieving it, as well as other information such as a hash of the user identifier and other information in the Flash local shared object, from the Flash local shared object. The Flash movie receives the user identifier and optionally other information and sends a request for the customization information to customization information server **238** with the coded information identifying the customization information as described above, such request having been coded into the Flash movie by customization information provider **244** as described above.

Customization information server **238** receives the request, and requests, via conventional techniques such as CGI, from the Flash movie the user identifier it received from the user and the information from the Flash local shared object, and customization information server **238** may send such information to persistent file validator **242** to validate the information and return the user identifier. Persistent file validator **242** decrypts the user identifier and checks the signature, IP or MAC address and/or certificate in the same manner as described herein with respect to the persistent file, signaling customization information server **238** if the Flash local shared object is not valid and providing the user identifier and other information otherwise. Customization information server **238** compares the decoded user identifier with the user identifier corresponding to the coded information (e.g. the 35 character code) in the request.

If the user identifier is authenticated as described above, customization information server **238** will provide, via encrypted communication manager **212** the proper customization information in the form of a file containing text, an image or a movie clip to be integrated into the Flash movie (if the user identifier does not match, customization information provider **244** may provide different text, a different image or a different movie clip indicating an error, and the Flash movie may reprompt the user for their user identifier). The Flash movie displays the customization information received, allowing the user to authenticate the sender of the e-mail message.

In still another embodiment, the one or more Flash movies provided by message manager **246** and/or customization information provider **244** in an e-mail message are self contained and do not require the use of customization information server **238** to display the customization information. In such embodiment, customization information provider **244** builds a Flash movie that operates as described below, and may incorporate the message it receives from message manager **246** or be provided in addition to it. The Flash movie is provided by message manager **246** in the e-mail message, to be displayed by the e-mail client **268** or browser **264,** either one running the Flash Player plug-in commercially available from Macromedia, Inc. of San Francisco, California.

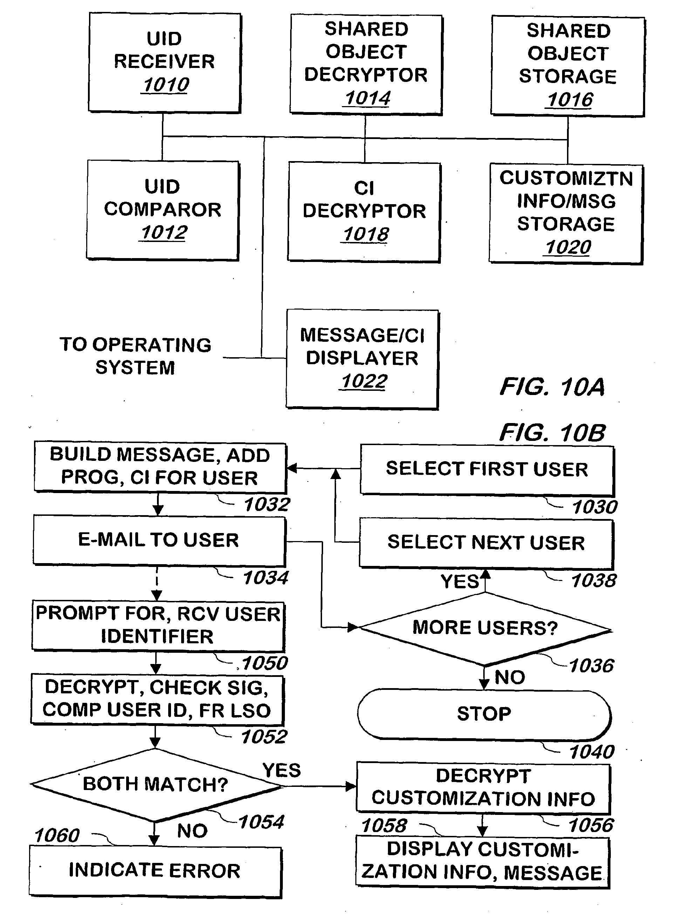

Referring now to Figure **10A**, a block schematic diagram of a Flash movie or other device used to display an e-mail message and customization information is shown according to one embodiment of the present invention. User identifier receiver **1010** generates a page containing editable text elements that prompt the user for his or her user identifier via an operating system (not shown). The user provides the user identifier to the operating system, which provides it to user identifier receiver **1010.** User identifier receiver **1010** provides the user identifier to user identifier comparator **1012.** In another embodiment, user identifier receiver **1010** does not prompt the user. Instead, the user identifier is coded into user identifier receiver **1010** by customization information provider **244** of Figure **2A** and user identifier receiver **1010** provides that user identifier to user identifier comparator **1012.**

User identifier comparator **1012** signals shared object decryptor **1014** upon receipt of the user identifier. When signaled, shared object decryptor **1014** retrieves an encrypted user identifier from a local shared object from shared object storage **1016** or from a portion of the Flash movie that contains such user identifier, decrypts it, validates it by rehashing one or more portions of it and comparing the result with a signature contained therein. Shared object decryptor **1014** then provides the decrypted user identifier to user identifier comparator **1012** if the Flash local shared object is valid, or signals user identifier prompter **1010** to identify an error if the Flash local shared object is not valid.

If shared object decryptor **1014** provides the user identifier to user identifier comparator **1012,** user identifier comparator **1012** compares the user identifiers received from user identifier receiver **1010** and shared object decryptor **1014.** If these two user identifiers match, user identifier comparator **1012** signals customization information decryptor **1018,** and otherwise, signals user identifier receiver **1010** to reprompt the user.

When signaled, customization information decryptor **1018** retrieves and decrypts customization information stored in customization information/message storage **1020,** which may be conventional memory or disk storage, and provides it to message/customization information displayer **1022.** Message/customization information displayer **1022** receives the decrypted customization information and displays it, and the message via the operating system (not shown) for use by the user as described above.

### Authentication of a User and a Payment Mechanism

In one embodiment, the user may use the customization information he has registered as described above to authenticate a web site for purposes of authorizing one or more payments, and the user may be authenticated to the web site or other computer system using the persistent file.

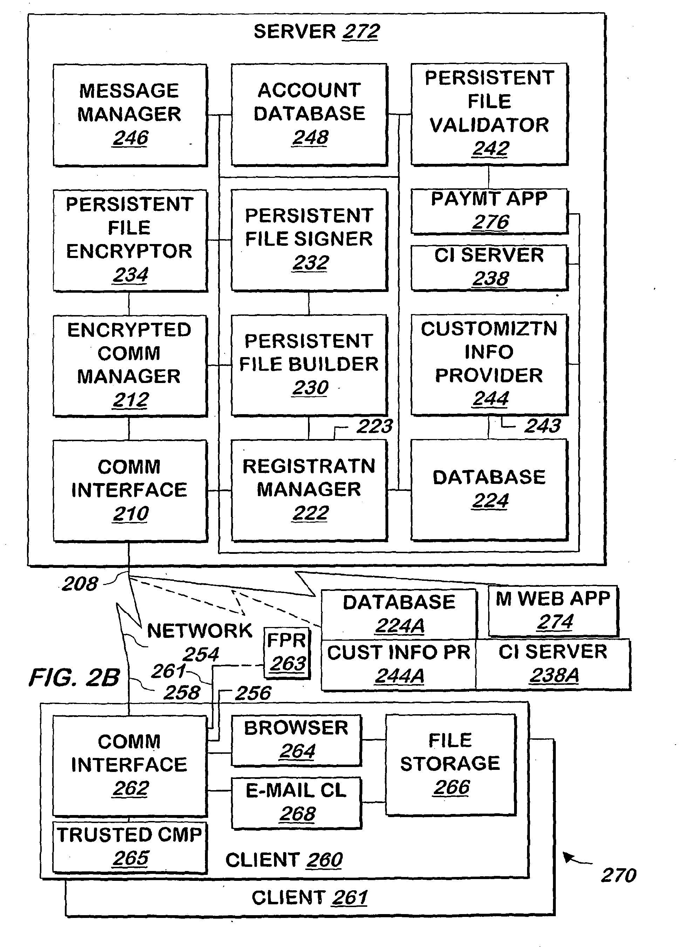

Referring now to Figure **2B**, a system for allowing a user to authenticate a computer system, and the same or a different computer system to authenticate the user, for the purpose of authorizing a payment or other transaction involving a payment instrument such as a credit card is shown according to another embodiment of the **present** invention. The system **270** of Figure **2B** operates in the same manner as system **200** of Figure **2A**, except that certain elements have been added as will be described below. Server **272** is identical to server **202** except that web application **240** has been replaced by payment application **276** which may have some or all of the features of, and operate in a manner similar to, web application **240,** in addition to those features and operations described herein. Server **272** may be used in a system which also contains one or more servers **202** of Figure **2A****.**

The user may initiate a transaction using merchant web application **274.** Merchant web application **274** contains a conventional application program for operating an on-line shopping web site that the user can use to browse products, and add them to a shopping cart or otherwise indicate acceptance of a purchase or license or rental or other transaction regarding one or more goods or service and indicate that the user wishes to pay for the transaction. Merchant web application **274** then calculates a total amount to be charged to the account of a financial institution, such as a bank credit card, debit card, checking account and the like.

Merchant web application **274** then provides a redirect command to browser **264,** such redirect command containing a web address or URL that corresponds to payment application **276** specifically, and server **272** more generally. In one embodiment, there may be different payment applications **276** on the same server **272** or different servers **272,** with each such payment application **276** processing a particular type of payment instrument (e.g. MASTERCARD, DISCOVER, PAYPAL, etc.). In another embodiment, the same payment application **276** processes payments for various types of payment instruments, with each type of payment instrument corresponding to a different web address or URL or parameter in a address or URL. In any of these embodiments, merchant web application **274** builds the proper URL or address based on a selection of a type of payment instrument to use that is made by the user on a web page provided by merchant web application **274.** In still another embodiment, a single payment application **276** is used for all types of payment instruments and payment application **276** either provides the web page to allow the user to select the type of payment instrument or uses a pre-stored type of payment instrument for the user.

merchant web application **274** builds into the redirect command certain parameters to the web address or URL used in the redirect command. The parameters may correspond to a merchant identifier that uniquely identifies the merchant to payment application **276,** a transaction identifier that uniquely identifies the transaction to merchant web application **274,** and the amount of the transaction to which the payment instrument is to be charged. In one embodiment, web merchant application **274** hashes these parameters and also includes the hash result as a signature in the URL of the redirect command.

Browser **264** receives and executes the redirect command by sending to communication interface **210** via network **254** and communication interface **262** a request to the URL or address specified with the redirect command and including the parameters as described herein. Communication interface **210** receives the request and forwards it to payment application **276.** In the embodiments in which multiple payment applications **276** reside on the same server **272,** communication interface **210** sends the request to the payment application corresponding to the request.

Payment application **276** is a conventional web application program that operates in a manner similar to some or all of web application **240** described above, except as noted herein. Payment application **276** internally stores the parameters from the request and validates the parameters by rehashing them and comparing the result to the signature received with the request. If the parameters are valid, payment application **276** validates the merchant identifier against a set of merchant identifiers and account numbers it stores in account database **248.** Payment application **276** then authenticates the user in any of the manners for authenticating a user described above as described for web application **240** of Figure **2A****.** (If any of these validations or authentications fail, payment application **276** provides a redirect command to browser **264** containing an error code and the transaction identifier, as well as a URL corresponding to merchant web application **274** for error processing.)

In one embodiment, to authenticate the user, payment application **276** provides the persistent file to persistent file validator, **242,** which decrypts the persistent file, validates it as described above, and provides the user identifier to payment application **276.** Payment application **276** provides one or more web pages requesting the user to enter his or her user identifier and password. At least one of the one or more web pages, requesting the user identifier and password, may be provided via communication interface **210** and optionally via customization information provider **244** in the manner described above with reference to web application **240** of Figure **2A****.** Briefly, for one of those manners, payment application **276** provides a web page via communication interface **210** to browser **264** that requests a user identifier, receives the user identifier and the information from the persistent file, and compares it to the user identifier in the persistent file, and if the user identifiers are the same, sends to customization information provider **244** the user identifier and another web page that requests the password for processing as described above. In another manner, payment application **276** sends the user identifier from the persistent file and a web page requesting both the password and user identifier. Customization information provider **244** adds the customization information to any web pages it receives, either directly, or via one or more tags or links or computer code that relate to customization information server **238** and contain a code identifying the user's customization information and provides the resulting one or more web pages to browser **264,** optionally via encrypted communication manager **212.** Browser **264** displays the web pages and any customization information as described above, allowing the user to authenticate the web site and decide whether to provide the user identifier, password or both, based on whether the customization information provided matches his or her expectation of the customization information as described above.

In one embodiment, any or all of the web pages initially generated by payment application **276** contain an indication of the charge amount and instructions that the user is providing the user identifier, password or both, to authorize the payment amount indicated, or such instructions and a means of indicating authorization may be provided on still another web page. In one embodiment, payment application **276** also displays some or all of the financial instrument information (e.g. last four digits of a credit card number and the type of the card, such as VISA or DISCOVER) that is stored in account database **248** for that user identifier on any or all of such web pages that indicate authorization is being indicated. If there are more than one financial instrument stored for the user, a default one may be used, with an option that can be indicated that causes payment application **276** to generate a web page allowing the user to select from among the various financial instruments to be used for the transaction, and payment application internally stores the one selected. The financial instrument information may be stored in database **248** by a system administrator, or entered by the user during a registration process similar to that described above.

Payment application **276** receives the password, and verifies that it matches a password corresponding to the user as described above in database **248.** If the result of the check is positive, payment application **276** either: A) charges the financial instrument in the amount received, using account information stored in account database **248** corresponding to the merchant identifier and generates or receives an authorization identifier indicating the transaction was authorized, and provides a redirect command to browser **264** that will cause browser **264** to transmit a request to merchant web application **274,** or B) requests authorization to charge that amount and issues or receives the authorization identifier and optionally stores the transaction amount, the authorization number and the merchant identifier in account database **248** and then redirects browser **264** to merchant web application **274.** The redirect command contains parameters containing the transaction number, the authorization number, and optionally an indication of whether the transaction succeeded or failed, along with a signature of these items produced by hashing some or all of them. Merchant web application **274** stores the parameters, reproduces the signature and compares it with the signature received as a parameter. If the signatures do not match, merchant web application **274** does not continue processing the order, and otherwise, continues with the processing as will now be described.

If the charge is not made by payment application **276** (e.g. only an authorization for such a charge is obtained as described above), it may be made at this time or at a later time by merchant web application **274,** providing the authorization identifier via another session, either to payment application **276** or to a financial institution, clearinghouse or other entity, which may be connected to network **254.** Merchant web application **274** may then initiate the provision of goods or services to the user (via a stored, or user-entered name and address) and may provide to browser **264** a web page so indicating that the transaction is complete, and may provide an e-mail to e-mail client **268** similar information.

### Trusted Computing and Biometric Authentication of the user.

It isn't necessary to employ the persistent file to authenticate the user. In one embodiment, any of the entities described above that use a cookie, Flash local object or other type of persistent file or the contents thereof, and/or a user identifier, password, or both, to authenticate a user, may authenticate the user using other means, and such other means may be performed in conjunction with registration manager **222.** For example, biometric authentication or physical token authentication may be used via a trusted computing or other similar capability.

Referring now to Figures **2A** and **2B**, in one embodiment, when registration manager **222** registers the user as described above, instead of placing a persistent file on the user's computer system, registration manager **222** authenticates trusted computing subsystem **265** and requests from trusted computing subsystem **265** a trusted computing identifier that trusted computing subsystem **265** can provide when it has authenticated the user. If trusted computing subsystem **265** is not present, or does not respond, or cannot be validated, registration manager **222** stores the persistent file as described above and operation of the system **200** or **270** proceeds as described above. In one embodiment, trusted computing subsystem **265** may respond that it is present, but that the user has not authenticated himself or herself to it yet. In such embodiment, registration manager **222** prompts the user to use trusted computing subsystem **265** to authenticate himself or herself, or indicates to trusted computing subsystem **265** to provide such a prompt and trusted computing subsystem **265** complies.

Trusted computing subsystem **265** may consist of hardware and software that can authenticate itself using conventional techniques and that the user can use to authenticate himself or herself. A user registers to trusted computing subsystem **265,** for example, by inserting a uniquely numbered token into a USB port **261** of communication interface **260** or placing his or her finger on a fingerprint reader **263** or other biometric information reader such as a voiceprint analyzer, retina scanner or the like attached via USB port **261** and allowing trusted computing subsystem **265** to read the fingerprint placed thereon, a process that may be repeated a number of times for increased accuracy.

Once the user has registered, to authenticate himself or herself to trusted computing subsystem **265,** the user can insert his or her uniquely numbered token into USB port 261 or place his or her finger on the fingerprint reader **263** or otherwise authenticate himself or herself to trusted computing subsystem **265.**

Once the user has authenticated himself or herself, trusted computing subsystem **265** provides evidence of its validity to registration manager **222,** for example, using conventional public key certificate and provides to registration manager **222** a trusted computing identifier that is unique to trusted computing subsystem **265** and optionally that user. Registration manager **222** checks the digital certificate using conventional means, and if it determines the trusted computing subsystem **265** has a valid certificate (a process referred to herein as authenticating or validating the trusted computing facility), registration manager **222** stores into database **224** or account database **248** the trusted computing identifier it receives from trusted computing subsystem **265.**

When an entity, such as customization information provider **244** or customization information server **238** provides the customization information as described above, the entity that instructed it to do so, such as message manager **246** may request from trusted computing subsystem **265** the identifier indicating the user has been authenticated and provide it to customization information provider **244** or customization information server **238,** which compares it to the trusted computing identifier in the database for the user having the user identifier it receives as described above if trusted computing subsystem **265** provides evidence of its authenticity and customization information provider **244** or customization information server **238** authenticates such evidence using conventional techniques such as those involving a public key certificate. If the trusted computing identifier received matches that stored, customization information provider **244** or customization information server **238** provides the customization information as described above, and otherwise it does not. In other embodiments, customization information provider **244** or customization information server **238** themselves attempt to authenticate trusted computing subsystem **265** and to retrieve the trusted computing identifier from trusted computing subsystem **265,** and compare it to the trusted computing identifier stored for the user identifier in account database **248,** such identifier having been stored there by registration manager **222** when the user registered. If the trusted computing identifier does not match the trusted computing identifier stored for the user or trusted computing subsystem **265** is not valid, customization information provider **244** or customization information server **238** will provide an error message in place of the customization information.

In still another embodiment, the entity that requests customization information provider **244** or customization information server **238** to provide the customization information, validates, and requests, receives and compares the trusted computing identifier from, trusted computing subsystem **265,** performs the comparison with the identifier stored in account database **248** and only makes such request if it determines that trusted computing subsystem **265** is authentic and the trusted computing identifier received matches one stored for that user in account database **248,** such trusted computing identifier having been stored in the user's account record in account database **248** by registration manager **222** during the registration process. In this embodiment, the trusted computing identifier may be used in place of the user-supplied user identifier, password or both, or may be used in addition to either the user identifier, password or both.

When an attempt is made to retrieve the trusted computing identifier as described above, if trusted computing subsystem **265** indicates that it is installed but the user has not authenticated himself or herself, the entity requesting the trusted computing identifier instructs trusted computing subsystem **265** to instruct the user to authenticate himself or herself to trusted computing subsystem **265** or that entity prompts the user to do so. If no response is received or a response is received indicating that no trusted computing subsystem **265** is present on client system **260,** the entity making the request attempts to retrieve the persistent file and uses it as described above.

In one embodiment, roaming is performed by moving at least a part of trusted computing subsystem **265** from one client computer system **260** to another **261** and so the installation of a persistent file on the client computer system **260** which is being used by the roaming user is not necessary. In still another embodiment, the roaming process employs a registration process that can retrieve and store associated with the user's identifier in database **224** or account database **248** additional trusted computing identifiers as described above used for roaming, and the trusted computing identifiers may be designated by registration manager **222** in such database as being for one time, or limited duration use in the same manner that each persistent file was described as being so designated in such databases as described above. Enforcement of such limitations operates in the same manner as enforcement of the limitations of the persistent files as described above.

### Methods

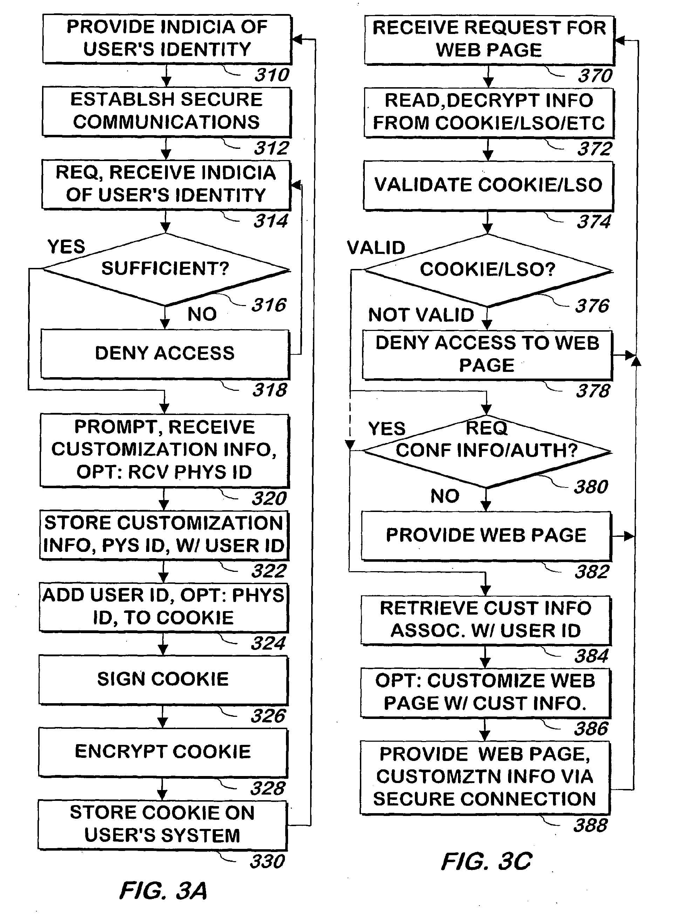

Referring now to Figure **3A****,** a flowchart illustrating a method of registering a user to allow the user to authenticate a communication from a computer system, a computer system to authenticate the user, or both, is shown according to one embodiment of the present invention.

An indicia of a user's identity may be generated and provided **310** as described above. The indicia provided in step **310** may be provided via the Internet or out-of-session (e.g. via e-mail, telephone or a different session) as described above in one embodiment, and in another embodiment, step **310** may be omitted. Secure communications are optionally established **312** with the user. Sufficient indicia of the user's identify are requested and an indicia of the user's identity is received **314.** If the indicia is not sufficient **316,** access to some or all of the remainder of the steps of Figure **3A** is denied **318** and the method continues at step **314,** and otherwise **316,** the method continues at step **320**.

At step **320,** the user is prompted to select or provide customization information as described above and the customization information is received. Step **320** may be performed via a secure communication channel, such as the SSL-encrypted Internet connection established in step **312.** In one embodiment, step **320** optionally includes obtaining a physical identifier of the user's computer system, such as a MAC address of an Ethernet card or the source IP address of messages received, if the user has indicated via a response to a prompt that the Internet connection being used is static, such as T1, DSL or cable modem. Customization information may include user-provided content or an indication of one or more pieces of server-supplied content that will be associated with an identifier of the user. Customization information is stored **322** with an identifier of the user, which may be supplied by the user, looked up from the indicia received in step **314** or generated as part of step **322.** In one embodiment, step **322** includes storing the physical identifier of the computer system associated with the user identifier.

A persistent file or other similar device that can preserve state on the user's machine from one session to another, such as a Flash local shared object, is built **324** using the user identifier and optionally the physical identifier of the computer system and/or a certificate as described above and the persistent file is signed **326,** encrypted **328** and stored on the user's system **330** and the method continues at step **310.** Although a cookie may be used as a persistent file, any other similar device, such as a Flash local shared object or other file, may be used as the persistent file.

Referring now to Figure **3B**, a flowchart illustrating a method of providing and receiving indicia of a user's identity is shown according to one embodiment of the present invention. The steps of Figure **3B** may be used in place of some or all of steps **310-318** of Figure **3A**, for example.

A user is prompted **340** to provide information that can be used to verify that the user is who he or she identifies himself or herself to be, such as a user identifier and a drivers license number. Such information, provided by the user, is received **342.** An attempt is made to verify **344** the information provided by the user, for example, by looking up the user's name and state of residence using the user identifier and sending the user's name and drivers license number to the motor vehicle department of the user's state of residence to verify that the driver's license number provided matches the name corresponding to the user identifier provided. A verification of the user's information may be generated or received from the same party that performs the verification or from a third party or a denial that the information provided corresponds may be generated or received from that same party or a third party **346.** If what is received is a verification that various portions of the information provided by the user corresponds to one another **348,** the method continues at step **350** and otherwise **348,** the method continues at step **360.**

At step **350,** the user may be prompted for an out-of-session identifier, such as a phone number, e-mail address or other out-of-session communication identifier and such identifier is received **352,** however, in another embodiment, such identifier is prompted and received as part of steps **340-342** and in still another embodiment, no such prompting is used: the out-of-session identifier is retrieved from a record in a database corresponding to the user identifier in step **352.** A password is generated and provided **354** using the out-of-session identifier received and the user is prompted to enter the password using the session and the password may be received **356.**

If the password generated in step **354** does not match that received in step **356** or no password is received in step **356** within a certain period of time **358,** the user is not allowed to register customization information as described herein **360** and otherwise **358,** the user is allowed to register customization information as described herein **362.** Step **362** may include requiring the user to provide a new password, and such password or the password provided may be stored associated with the user identifier as described above.

It isn't necessary to use the out-of-session communication branch in steps **350-358.** In one embodiment, if the user information received in step **342** verifies the user's identity **348,** the method continues at step **362,** as indicated by the dashed line in the Figure. In still another embodiment, the out-of-session identifier is already known and this can be used to authenticate the user, so the method begins at step **354** in one embodiment, or step **354** follows step **342,** and the verifiable information of steps **340** and **342** includes only a user identifier or a user identifier and a password.

Referring now to Figure **3C****,** a flowchart illustrating a method of allowing a computer system to authenticate a user and/or allowing the user to authenticate communications received from the same or a different computer system is shown according to one embodiment of the present invention. The steps of Figure **3C** may be performed after some or all of the steps of Figure **3A****.**

A request for a web page is received **370** and information from an encrypted persistent file is read **372** from the device from which the request was received and the persistent file is decrypted. The persistent file is validated **374** as described herein. If step **374** indicates that the persistent file is not valid **376,** access to the requested web page or the remainder of a web site may be denied **378** and the method continues at step **370,** and otherwise **376,** the method continues at step **380.**

At step **380,** if the request is a request for a web page that will not request confidential information or provide information that the user may want to have authenticated, the requested web page may be provided **382** and the method continues at step **370,** and otherwise **380**, the method continues at step **384.** In another embodiment indicated by the dashed line in the Figure, the test of step **380** is not performed and step **384** follows the "valid" branch of step **380** unconditionally.

At step **384,** a user identifier stored in the persistent file retrieved in step **372** or entered by a user is used to retrieve customization information associated with that user identifier as described above and the customization information may be optionally incorporated into the requested web page **386** and the web page and customization information are provided, either via a secure connection, if the customization information is provided over the same connection as the web page, or the customization information may be provided out-of-session as described above **388.**

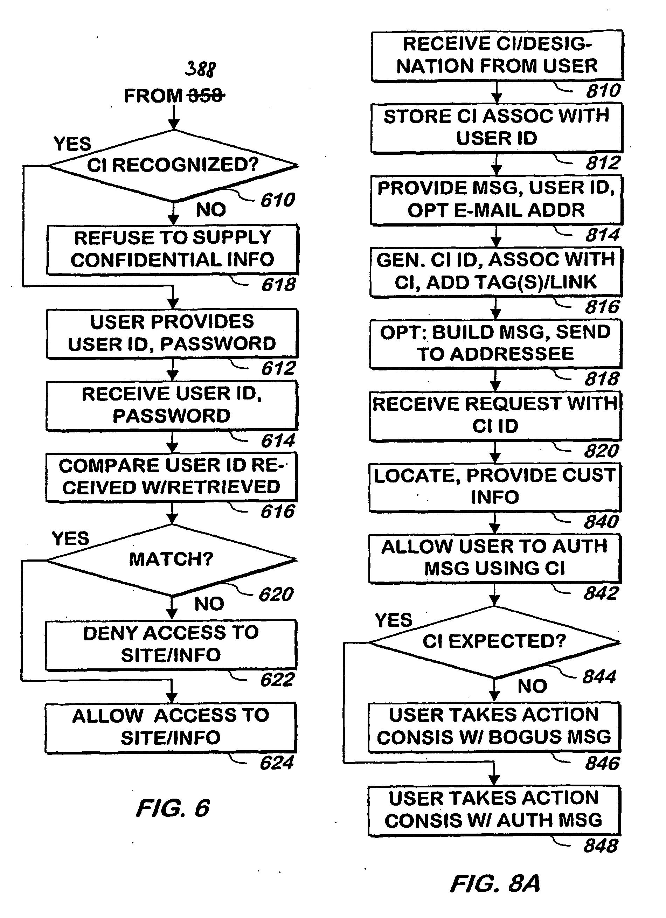

Figure 6 is a flowchart illustrating a continuation of the method of Figure **3C** according to one embodiment of the present invention. Referring now to Figure **6****,** after step **388,** if the user recognizes the customization information **610,** the user may provide a user identifier and password **612,** for example, using the web page provided in step **386,** and the user identifier may be received **614** and compared **616** to the user identifier retrieved in step **372.** If the user does not recognize the customization information **610,** the user may refuse **618** to provide confidential information such as a user identifier, password, or both.

If the user identifier received from the user in step **612** does not match **620** the user identifier retrieved in step **372,** the user is denied further access to some or all of the web site or information related to the user **622** and otherwise **620,** the user is granted **624** such access.

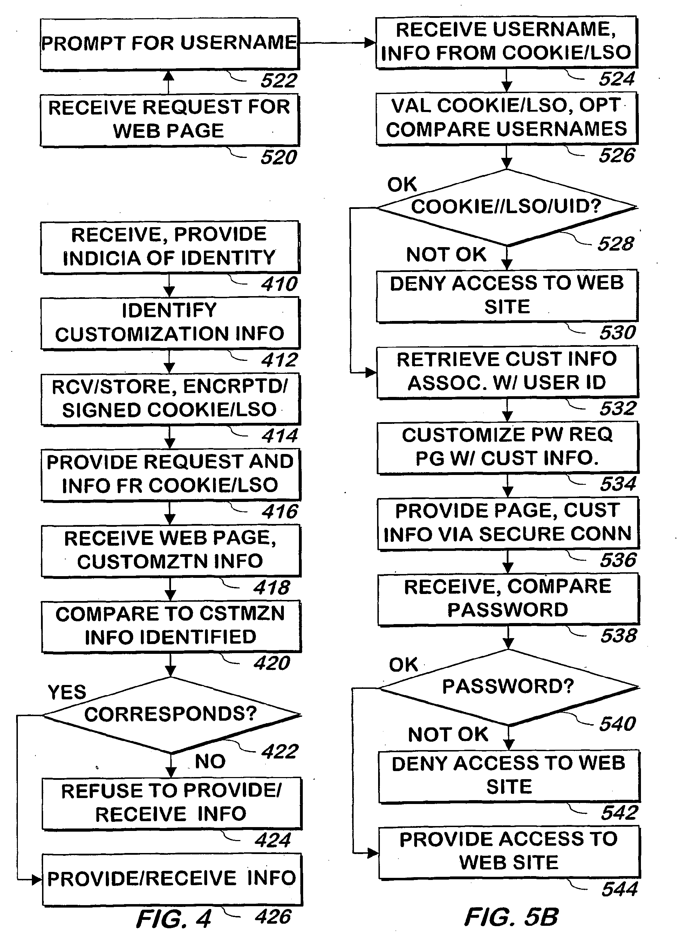

In another embodiment, the customization information is not provided until the user has supplied a user identifier or other similar identifier. Referring now to Figure **5B**, a method of authenticating a user to a computer system and authenticating a communication to the user from the same or a different computer system is shown according to one embodiment of the present invention. A request for a web page is received **520** and a web page is provided that contains a prompt for a user identifier **522.** The web page provided in step **522** does not contain customization information nor prompt for confidential information and it need not supply information that the user may wish to authenticate other than the URL of its source.

The user identifier and other information from the signed encrypted persistent file are received **524** as described above. The persistent file is decrypted and/or validated as described above and the user identifier compared to the user identifier supplied via the web page **526.** If the persistent file is not valid does not match or the user identifiers do not match **528** or both, the user is not provided access to the remainder of the web site **530.**

Otherwise **528,** customization information is retrieved **532** that is associated with the user identifier, and a web page containing a password request is customized **534** with the customization information retrieved in step **532.** The page customized in step **534** is provided **536** to the user, such as via a secure connection, and a user-supplied password is received **538.** A correct password is retrieved, for example, from a database using the user identifier, and the user supplied password is compared with the correct password **540.** If the user supplied password does not match the correct password **540** the user is denied access to further portions of the web site **542** and otherwise **540,** access to the web site is granted **544** Figure **5B** employs a password, but in other embodiments, any confidential information may be used in addition to, or in place of, the password and some or all of steps 538-544 need not be performed.

In one embodiment, the persistent file contains a digital certificate and/or an identifier of the computer system, such as a MAC address of a network card, a static IP address used by that computer system or other similar information that may be used to at least indicate, though not with certainty, that a computer system being used by the user is the same one used to register as described above. Step **524** may include receiving that digital certificate and/or identifier from the persistent file and a similar identifier from the computer system and step **526** includes comparing the two identifiers, validating the digital certificate, or both. At step **528,** in addition to the conditions specified above, if the two computer system identifiers do not match, or the certificate is not valid access to some or all of the web site is denied, and otherwise, if the other conditions (signature doesn't match or user identifiers do not match) set forth above are not true, the method continues at step **532.**

Referring now to Figure **4****,** a method of authenticating by a user a communication from a computer system is shown according to one embodiment of the present invention. Sufficient indicia of identity is optionally received (e.g. out-of-session) and provided as described above **410.** Customization information is identified, such as providing it, selecting it or receiving it as described above **412.** An encrypted, signed persistent file may be received and stored as described above **414.**

A request for a web page is provided, and optionally, information from the encrypted, signed persistent file is provided **416.** The web page and optionally, certain customization information, is received **418** and the customization information is compared **420** to what was provided or selected in step **412.** If the customization information received corresponds **422** to that which was identified in step **412** (e.g. because it matches or is otherwise expected), information may be received and believed or provided **426** and otherwise, the user may refuse to receive or believe the information received or refuse to provide information requested **424**.

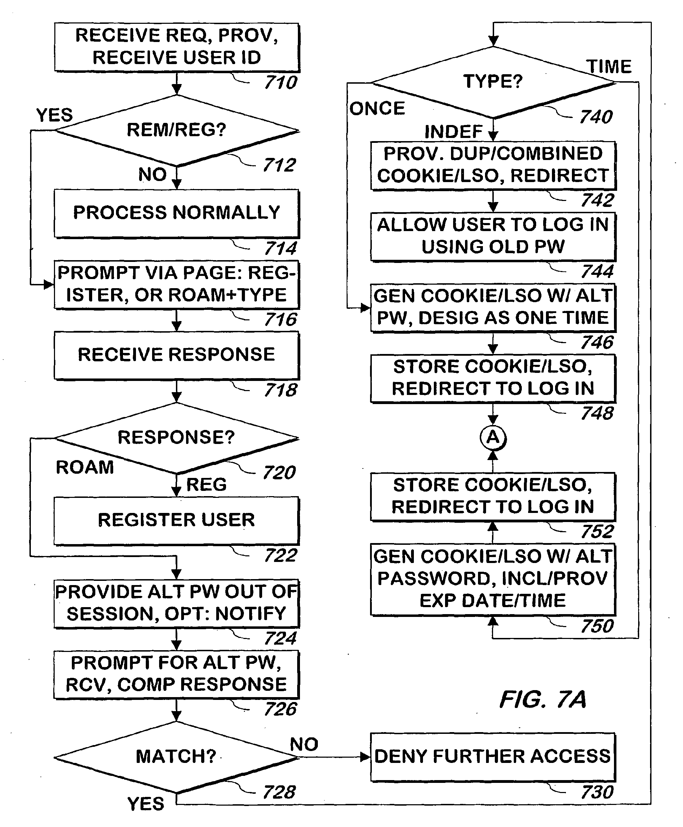

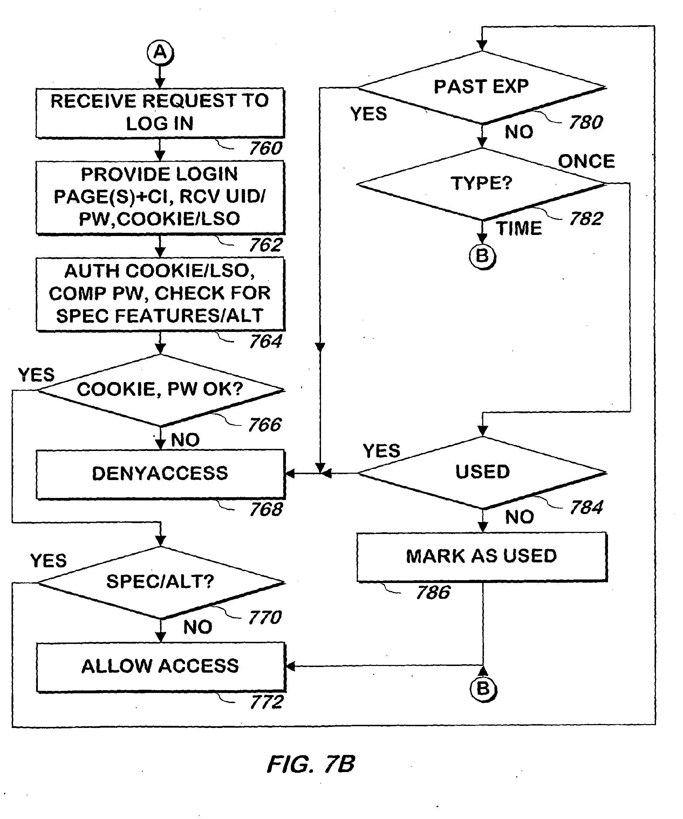

Referring now to Figure **7****,** consisting of Figures **7A** and **7B****,** a method of allowing a roaming user to log in from a computer system other than the computer system from which the user registered as described above is shown according to one embodiment of the present invention. A request for a log in page is received, and such a page is provided **710.** In one embodiment, the log in page contains a text box to allow the user to enter his or her user identifier, and the user may enter his or her user identifier, and check a check box on the web page that indicates a remote (i.e. "roaming") log in or registration, and return the contents of the text box, such as by using conventional CGI techniques. If the remote/registration check box is not selected or a registration or roaming log in is otherwise not indicated **712,** the log in process described herein occurs **714.** Otherwise **712,** a web page is provided with one or more user interface elements that allow the user to indicate that the user wishes to register, or log in from that computer system, a process referred to as roaming, and the type of roaming the user wishes to perform **716.** The user enters a response and provides it, for example, using conventional CGI techniques, and the response is received **718.**

If the response indicates that the user wishes to register **720,** the user registers customization information **722** as described herein. Otherwise **720,** an alternate password is generated and provided **724** out-of-session (e.g. via e-mail or telephone), using an out-of-session identifier (e.g. e-mail address or telephone number) that has been prestored, associated with the user identifier received from the user in step **712** or the user may provide sufficient indicia of his or her identity and provide the out-of-session identifier. Step **724** may include providing a web page notifying the user that the alternate password has been provided, and this step may be performed depending on the type of identifier, for example, providing it if the out-of-session identifier is one in which the alternate password is stored, for example, using e-mail, but not if the alternate password would not be stored, for example, if the out-of-session identifier is a telephone number.

A web page is provided requesting the user to enter the alternate password and a response may be received and compared **726** to the alternate password provided in step **724.** In one embodiment, this web page may be the same web page as is used to notify the user that the alternate password has been provided as described above. If the response matches the alternate password **728,** the method continues at step **740** and otherwise **728,** the user is denied **730** access to certain information and actions available via a web site.

At step **740,** if the user has specified at step **718** the type of roaming that will allow the computer system from which the user is logging in be used indefinitely to log that user in, a copy of the user's persistent file is copied to the computer system **742** and the user may log in **744** as described above, optionally by being redirected to the log in page.

In one embodiment, if a persistent file for that web site is already on that computer system, it will be read in step **716,** and step **742** includes generating a combined persistent file that contains information for the one or more users corresponding to the retrieved persistent file and the roaming user. A different serial number may be assigned to the persistent file for each user described therein for use as described above. The log in process includes checking all the user identifiers stored in the persistent file and allowing the user to log in if the user's user identifier corresponds to any one of the users corresponding to the information in the persistent file. When combining persistent files, those users corresponding to expiration dates and times that are before the current date and time are removed from the persistent file.

At step **740,** if the type of roaming indicated in step **718** is a one time use, a persistent file is generated that is designated as a one time use persistent file, such designation being either in the persistent file or in a database **746.** In one embodiment, step **746** also includes computing and associating an expiration date and time with the persistent file, either by storing it in the persistent file or storing it associated with the signature of the persistent file and the user identifier in a database as described above. The persistent file generated in step **746** may be a combined persistent file, combing the user's information with that of other users read from an existing persistent file as described above with each user corresponding to the persistent file having a different serial number assigned to, and stored in, the combined persistent file.

The persistent file is stored **748** on the computer system and the user is allowed to log in, for example, by redirecting the user to a log in page, and the method continues at step **760** of Figure **7B**. Step **748** may include assigning a serial number to the user and persistent file and storing the serial number and password provided or a different password to be used with that persistent file, such storage associated with the user identifier.

If the type of roaming indicated in step **718** is limited duration roaming **740,** the duration may be specified by the user using a user interface element on the web page provided at step **716** and the duration is received as part of the response in step **718.** A persistent file is generated and an expiration date and time is computed for the persistent file by adding the user specified duration to the current time (or by using a user specified expiration in place of the user specified duration) and the expiration date and time is stored associated with the persistent file, either by including it with the persistent file or adding the expiration date and time and the signature of the persistent file into a database associated with the user identifier **750.** The persistent file is stored on the computer system, and optionally combined with the information from another persistent file as described above (with each user corresponding to the persistent file having a different serial number assigned to, and stored in, the combined persistent file), and the user is allowed to log in, for example by redirecting the user to a log in page **752.** Step **752** may include assigning a serial number to the user and persistent file and storing the serial number and password provided or a different password to be used with that persistent file, such storage associated with the user identifier.

At step **760** (shown in Figure **7B**), the request to log in is received. One or more log in pages may be provided to the user, with the log in page requesting the user's password being provided with the customization information registered for the user as described above, and the persistent file and the user's user identifier and password is received **762.** The persistent file is validated as described above, the user identifier supplied by the user may be compared with that stored in the persistent file, the password received is checked against the password stored for the user identifier either the regular password or the one provided in step **724** based on the serial number of the persistent file, and the persistent file is checked to see whether it corresponds to special features, for example whether it is a one time or limited duration persistent file as described above **764.**

If the persistent file is valid, the user identifiers match, and the password received matches the user's regular password or the password corresponding to the user identifier and the serial number of the persistent file **766,** the method continues at step **770** and otherwise **766,** access to certain information is denied **768.**

At step **770,** if the persistent file does not correspond to the special features of being a one time use or limited duration file, the user is allowed access to information and/or activities of the web site **772.** If the persistent file corresponds to the special features **770,** if the persistent file is past its expiration date **780,** the method continues at step **768.** Otherwise **780,** if the persistent file is time limited (but not a one time use persistent file) **782** and the method continues at step **772.**

If the persistent file is a one time use persistent file **782,** if the persistent file has been previously used **784,** the method continues at step **768** and otherwise **784,** the persistent file may be marked as used **786** and the method continues at step **772.**

The method described above assumes that one time use persistent files are also of limited duration. In the case in which they are not, steps **782** and **780** may be performed in the reverse order, with step **780** being performed only for the "time" branch of step **782** and the "no" branch at step **780** being followed by step **772.**

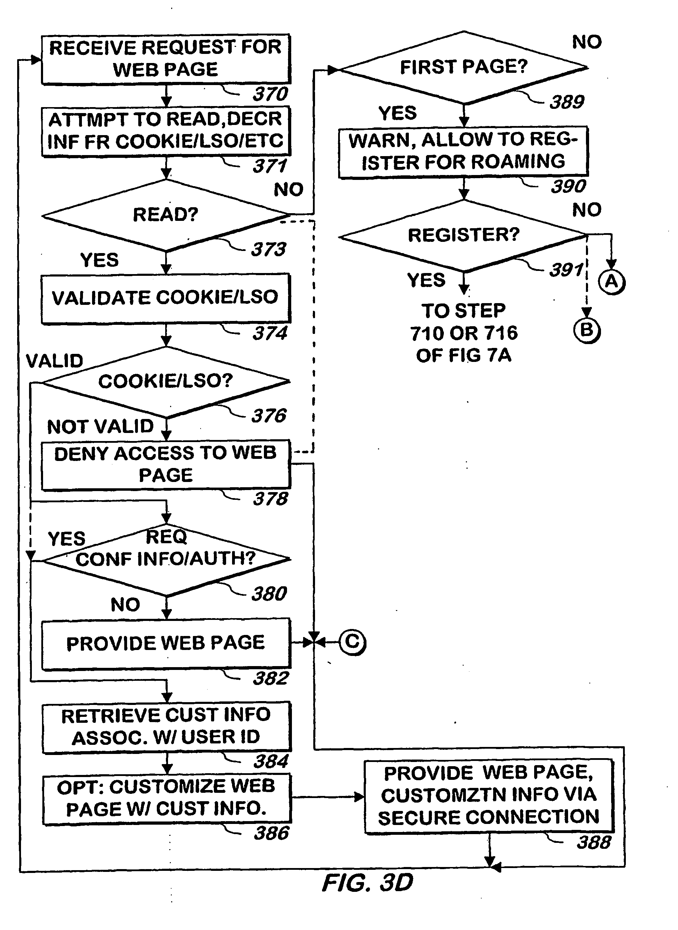

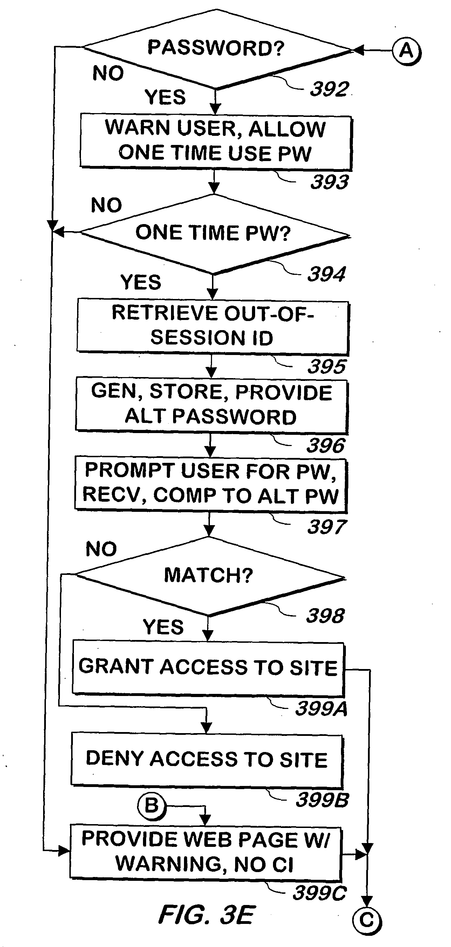

Referring now to Figures **3D** and **3E** a method of allowing a user to optionally authenticate one or more communications from a computer system and a computer system to optionally authenticate a user and displaying information is shown according to one embodiment of the present invention. The steps of Figures **3D** and **3E** are the same as those of Figure **3C**, except as noted below.

Instead of step **372,** an attempt is made **371** to read and decrypt information from the persistent file. If the attempt is successful **373,** the method continues at step **374,** and otherwise **373,** the method continues at step **389.** In one embodiment, as indicated by the dashed line in the figure, if the persistent file is not valid, the method may continue at step **389** in one embodiment, or step **378** in another.

At step **389,** if the page requested is the first page in the session with that user **389,** a web page is provided warning the user that the computer system is not registered and that links to the site being requested should not be followed or pasted into a browser, but typed instead, and containing a link to allow the user to register the computer system for roaming as described above **390.** If the user clicks the link for registration **391,** the method continues at step **710 or 716** of Figure **7A** or another step of Figure **7A** or **7B****.** If the user does not click the link to register **391**, or the page is not the first page in a session with that user **389,** the method continues at **step 392** of Figure **3E** in one embodiment, or **399C** of Figure **3E** in another embodiment.

At step **392** of Figure **3E****,** if the web page does not request a password **392,** the method continues at step **399C** and otherwise **392,** a web page is provided **393** warning the user that the computer system may log keystrokes and offering a link to receive a one time use or other alternate password. If the user does not select the link to receive the alternate password **394**, the method continues at step **399C.** Otherwise **394,** an out-of-session identifier such as an e-mail address or a telephone number is retrieved **395** and an alternate password is generated, stored associated with the user identifier and provided via the out-of-session identifier **396.** The user is prompted to retrieve the alternate password and enter it, the password is received and compared to the alternate password generated **397.** If the password received matches the alternate password **398,** the user is granted access to some or all of the web site **399A** and the method continues at step **370** and otherwise **398,** the user is denied access to some or all of the web site **399B**. At step **399C,** the requested web page is provided to the user with the warning described above in place of any customization information and the method continues at step **370**. In one embodiment, only web pages that would otherwise contain customization information had the user been viewing them on the same computer system used to register the user as described above contain the warning and other pages do not.

Referring now to Figure **8A****,** a method of allowing a user to authenticate an e-mail message is shown according to one embodiment of the present invention. The method may be repeated for each of several users.

Customization information is received or designated by a user **810** and the customization information is stored **812** associated with the user identifier for that user as described above. An e-mail message is prepared for the user and the message, and user identifier, and optionally the e-mail address of the user is provided **814.** One or more customization information identifiers are generated and built into a link or one or more tags, or code containing one or more links, or any or all of these things, and added to the message as described above, and the customization information identifier is stored associated with the user identifier or the customization information for that user identifier 816. The message is optionally built into an e-mail message (if it was not already built into one) and the e-mail message is sent to the addressee **818.** A request is received for the information corresponding to any of the links described above (e.g. a link, a link in a tag, or a link in computer code), either because the user opened the message or clicked on or pasted a link or operated the computer code **820.**

The customization information corresponding to the link or links is located and provided in response to the request **840** and the user is allowed to authenticate the message using the customization information **842.** If the customization information provided is the customization information expected by the user **844,** the user may treat the message as authentic **848.** Otherwise or if no customization information is received or the customization information is not what is expected **844,** the user may treat the message as not authentic **846.**

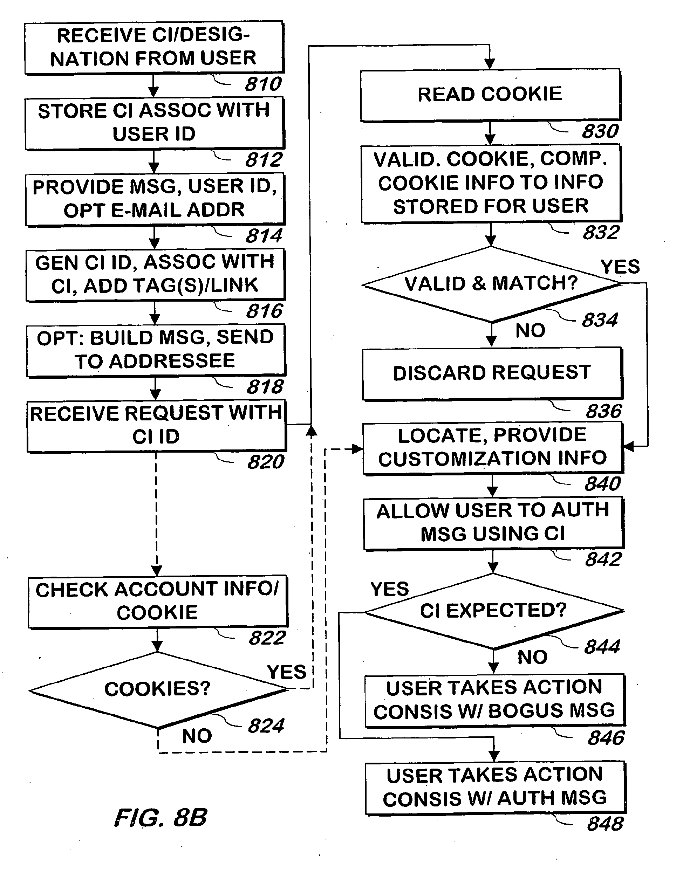

Referring now to Figure **8B**, a method of allowing a user to authenticate an e-mail message and a computer system to authenticate the user is shown according to one embodiment of the present invention. Figure **8B** is the same as Figure **8A** with the exception of elements and flow between steps **820** and **840.** In one embodiment, instead of step **840** following step **820,** step **830** follows step **820,** with steps **830 - 836** added as follows:
At step **830,** information from a persistent file is received. The persistent file is validated as described above and information, such as a user identifier, from the persistent file, is compared **832** with information, such as a user identifier associated with the customization information identifier received with the request in step **820.** If the persistent file is valid and the information compared as described above matches **834,** the method continues at step **840** and otherwise **834,** the request is discarded **836** or an error message may be provided in response.

The cross checking of the information from the persistent file with the stored information may occur in response to certain information stored associated with the user's account identifier, such as whether the user's e-mail client supports persistent files or cookies specifically. As indicated by the dashed lines in the Figure, in one embodiment, instead of step **830** following step **820,** step **822** follows step **820.**

At step **822,** information stored with the user identifier is checked to see if the e-mail client of the user supports persistent files or cookies specifically. If so **824,** the method continues at step **830** and if not **824,** the method continues at step **840.** The information stored with the user identifier may be placed there by the user, a system administrator, or it may have been the result of a prior read or operation of the persistent file, as described above.

Referring now to Figure **10B****,** a method of providing and displaying an e-mail message is shown according to one embodiment of the present invention. A first user is selected **1030** and an e-mail message is built **1032** for the selected user, including text for the message, which may be personalized for the user, code that implements the steps **1040-1050,** such as Flash code or Javascript code, and encrypted customization information. The message is built into an e-mail message and sent **1034** to the e-mail address of the selected user. If there are additional users **1036,** another user is selected **1038** and the method continues at step **1032** using the newly selected user, and otherwise **1036,** the method terminates **1040.**

After the message is sent to a user as described above with reference to step **1034,** it may be operated by any such user as described in steps **1050-1060,** and indicated by the dashed line between step **1034** and step **1050,** for example when the user attempts to open the message.

At step **1050,** the user is prompted for a user identifier, and the user supplies the user identifier. A Flash local shared object or other similar file is read and decrypted and a signature is generated using information from the file and compared against a signature stored in the file and the user identifier received from the user is compared with a user identifier in the Flash local shared object **1052.** If the signatures match, and the user identifier received in step **1050** matches a user identifier contained in the file **1054,** the encrypted customization information is decrypted **1056** and the decrypted customization information and the message text is displayed to allow the user to authenticate the source of the message **1058,** and otherwise **1054,** an error may be indicated **1060.** In another embodiment, the message itself contains the encrypted user identifier and step 1052 consists of decrypting that user identifier (instead of one from a Flash local shared object) and comparing it to the user identifier received from the user.

### Secure Transactions

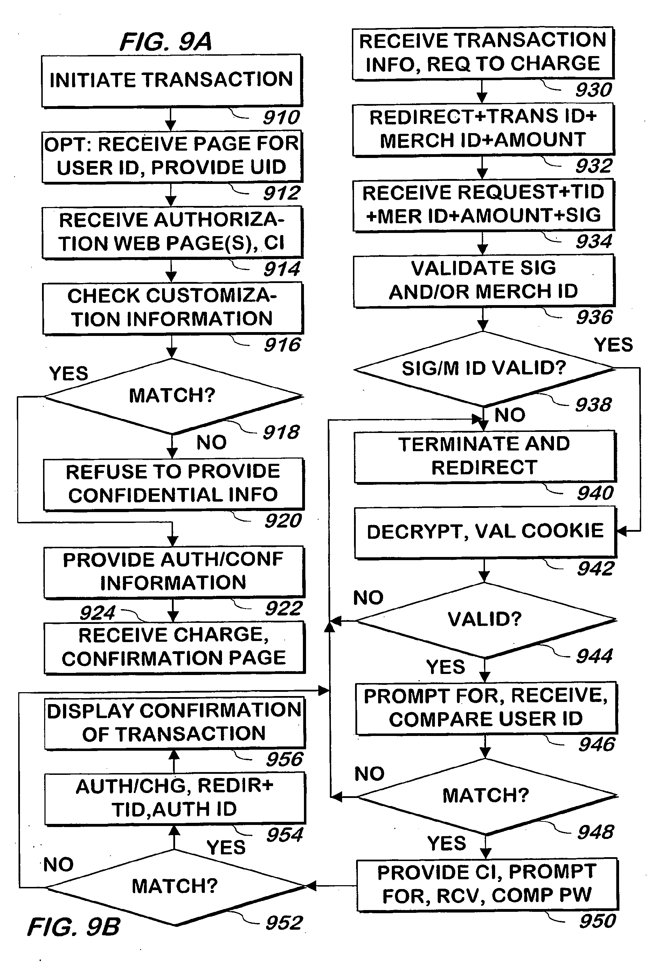

Referring now to Figure **9A****,** a method of paying for a transaction over the Internet is shown according to one embodiment of the present invention. A transaction is initiated **910** as described above. A web page requesting the user's user identifier is optionally received **912.** One or more web pages are received **914** containing the user's customization information and requesting authorization of the payment as described above by providing confidential information such as a password and/or account number. The customization information is checked **916** against customization information expected. If the customization information is not received or does not match that expected **918,** authorization is not provided **920** and otherwise **918,** authorization is provided **922,** a charge is received against a financial instrument of the user and a confirmation of the transaction is received **924.**

As noted above, steps **912** and **914** may be combined so that the user identifier and confidential information may be requested and provided via a single page containing the user's customization information.

Referring now to Figure **9B**, a method of receiving authorization to charge a financial instrument of a user is shown according to one embodiment of the present invention. Transaction information, such as a quantity of goods and/or services for which the charge is to be made, is received, along with an express or implied request to charge a financial instrument **930.**

A redirect command is provided **932** and executed that includes information that may be coded in the form of parameters or otherwise, including any or all of: an identifier of the merchant or otherwise indicating an account into which payment is to be received, an identifier of the transaction, and the transaction amount. A signature of one or more of these items may also be provided, or another code may be provided that allows validation of the information in the command. The execution of the redirect command causes a request to be generated as described above, and the request is received **934** containing the coded information. In one embodiment, the request is received by a different commercial entity than the one that sent the command in step **932**.

The signature and/or identifier of the merchant or other account that is to receive the payments is validated **936** as described above and if the signature or identifier is not valid, **938**, processing of the payment is terminated and a redirect command may be provided to redirect the user back to the original web site **940.** The redirect command may indicate the error so that it may be handled by the web site from which the user was originally redirected. If the signature and the merchant or other similar identifier is valid **938,** a persistent file is decrypted and validated **942.** If the persistent file is valid **944,** the user is prompted via a web page for a user identifier, the user identifier is received and compared to that from the persistent file, and/or from among those registered as described above **946** and the method continues at step **948,** and otherwise **944,** the method continues at step **940**.

At step **948,** if the user identifier received in step **946** matches the user identifier in the persistent file, a user identifier registered, or both, customization information corresponding to that which will be recognized or otherwise expected by the user is provided on a web page prompting the user for confidential information, such as a password, account number at a financial institution, or both of these, the confidential information is received and compared with confidential information stored for that user **950** and the method continues at step **952,** and otherwise **948,** the method continues at step **940.**

At step **952,** if the confidential information received in step **950** matches the confidential information to which it was compared, an authorization identifier may be generated or received, a charge may be made to the user's financial instrument (either one stored for that user or specified by the user), and a redirect command is provided that may include coded information, such as the transaction identifier and authorization identifier **954** and optionally, a signature of these that can be validated. Step **954** may include sending the authorization identifier from one entity to another and that entity receiving the authorization identifier. The result of the redirect may be that a web page or e-mail is made to the user confirming that the transaction has been made **956.** If the comparison of step **950** fails **952,** the method continues at step **940.**

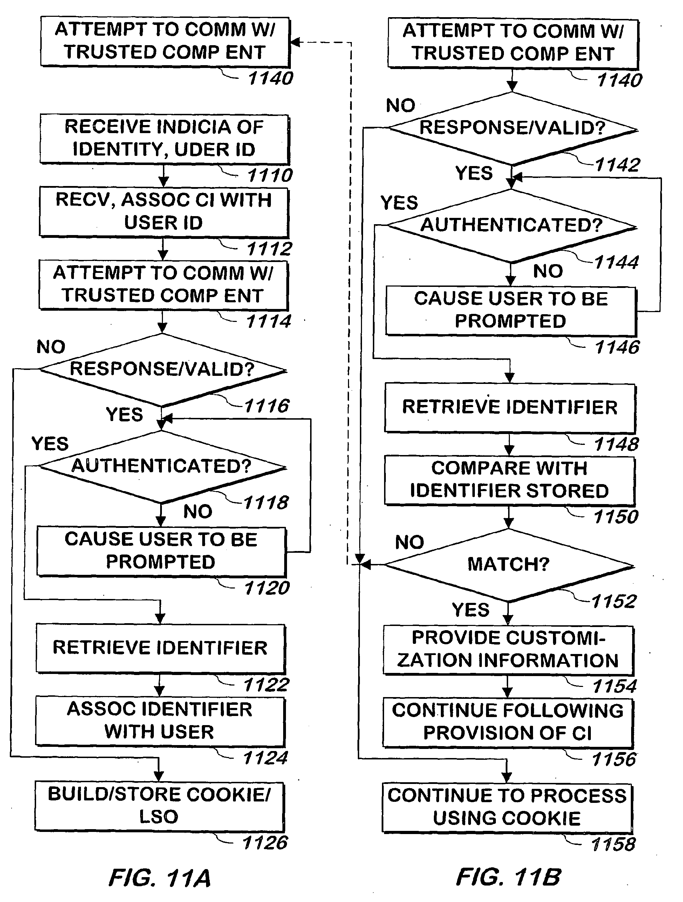

Referring now to Figure **11A****,** a method of registering a user is shown according to one embodiment of the present invention. An indicia of a user's identity and a user identifier is received **1110** as described above. Customization information is received and associated with the identifier of the user **1112.** An attempt is made **1114** to communicate with a trusted computing facility, such as a biometric subsystem. If a response is received from the trusted computing facility, and optionally, the trusted computing facility itself is validated **1116,** if the trusted computing facility indicates that the user is currently authenticated **1118,** a trusted computing identifier is received **1122** and the trusted computing identifier is associated with the user identifier **1124.** If the user is not authenticated **1118,** the user is prompted **1120** to authenticate himself or herself to the trusted computing facility. If there is no response from a trusted computing facility or it cannot be validated **1116,** a persistent file is generated and stored on the user's computer system as described above 1126.

Referring now to Figure **11B****,** a method of authenticating a user is shown according to one embodiment of the present invention. An attempt is made **1140** to communicate with a trusted computing facility, such as a biometric subsystem. If a response is received from the trusted computing facility and, optionally, the trusted computing facility is validated **1142,** if the trusted computing facility indicates that the user is currently authenticated **1144,** a trusted computing identifier is retrieved **1148** and the trusted computing identifier is compared with the identifiers stored **1150.** Step **1150** may be performed by scanning all the trusted computing identifiers stored for all users, or all of those stored for a particular user who has identified himself, for example, using a user identifier or via a request containing a parameter or a unique link. If a match occurs **1152,** the customization information is provided **1154** and other steps described herein with reference to any of the other Figures that follow the user's authentication by the provider of the customization information, may also be performed **1156.** If a match does not occur **1152,** other steps, described herein with reference to any of the other figures, may be performed, such as using a persistent file, to authenticate a user **1158.**

If at step **1144,** the user is not authenticated to the trusted computing subsystem, the user is prompted to authenticate himself or herself **1146** and the method continues at step **1144.** If at step **1142,** the trusted computing facility does not respond or is not valid, the method continues at step **1158.** In one embodiment, indicated by the dashed lien in the Figure, instead of step **1158** being performed as described above, access to the customization information is denied 1140.

The method of Figure **11B** may be performed as part of the authentication of the user processes described above, either in place of prompting the user to provide a user identifier, password or both, in place of receiving, authenticating and comparing a user identifier stored in a persistent file, or any or all of these.

the present invention is only limited by the scope of the included claims.

## Claims

1. A method of receiving information useful for logging a user into a computer system (202; 272), comprising:
causing a user identifier to be stored in a persistent file (266) of a client system (261);
receiving from the user a request to log into the computer system (202; 272);
providing to the user a prompt to enter a user identifier and to indicate a remote registration or roaming log in;
responsive to the request and user identifier received, if the remote registration or
roaming log in is not indicated:
receiving the persistent file (266) including the user identifier from the client system (261); and
determining if the user identifier received from the user matches the user identifier received in the persistent file (266);
or, if the remote registration or roaming log in is indicated:
generating an alternate password;
providing the alternate password to the user out-of-session using an out-of-session identifier;
providing from the computer system (202; 272) to the user a prompt for the alternate password;
receiving a response from the user responsive to the prompt;
determining if the response received from the user matches the alternate password; and
responsive to a determination that the response received matches the alternate password:
generating another persistent file comprising a user identifier, and causing said another persistent file to be stored on a different client computer system (260);
responsive to a login request, receiving the another persistent file including the user identifier from the different client system (260);
providing from the computer system (202; 272) to the user a prompt for the user identifier;
receiving a response from the user responsive to the prompt for the user identifier; and
determining if the response received from the user matches the user identifier received in the another persistent file; and
responsive to a determination that the response received matches the user identifier received:
providing from the computer system (202; 272) to the user a prompt for confidential information;
providing to the user customization information identified in a registration process for said user, said customization information corresponding to the user identifier received that is perceptible to the user and can allow the user to authenticate the computer system (202; 272) if the customization information provided matches customization information expected by the user; wherein the correspondence of the customization information with the user identifier is not ordinarily publicly known;
receiving said confidential information from said user, and comparing said confidential information with confidential information stored for that user; and
if the confidential information received from said user matches the confidential information to which it was compared, allowing access to the computer system (202; 272).

2. The method of claim 1 wherein the customization information was identified by the user prior to the receiving the request step.

3. The method of claim 2 wherein the customization information was identified by the user providing the customization information to the computer system (202; 272).

4. The method of claim 1 wherein the customization information for the user may be different from customization information for at least one other user who may log into the computer system (202; 272).

5. The method of claim 4, wherein the customization information for the user may be different from customization information for all other users who may log into the computer system (202; 272).

6. The method of claim 1 wherein the providing to the user customization information step is additionally responsive to at least a portion of the persistent file received from the client system (260, 261) other than the user identifier.

7. The method of claim 1 wherein the providing to the user customization information step is additionally responsive to at least a portion of an identifier corresponding to the client system (260, 261).

8. The method of claim 7 wherein the user identifier is encrypted in the identifier corresponding to the client system (260, 261).

9. The method of claim 7, wherein the identifier corresponding to the computer system (202; 272) comprises at least one identifier of at least one hardware component of the client system (260, 261).

10. The method of claim 1, wherein the user identifier is encrypted in the persistent file.

11. The method of claim 1 wherein the persistent file comprises a local shared object capable of being used by a Flash movie.

12. A computer program product (174) including computer readable program code (176) for performing the method of one of the preceding claims.

13. A system (200, 270) for receiving information useful for logging a user into a computer system (202; 272), comprising:
a registration manager (222) for causing a user identifier to be stored in a persistent file (266) of a client system (261);
a user identifier prompter (510) for: receiving from the user a request to log into the computer system (202; 272) and a user identifier and an indication whether a remote registration or roaming log in is selected; and responsive to the request and
user identifier received, if the remote registration or roaming log in is not indicated:
receiving the persistent file (266) including the user identifier from the client system (261); and
determining if the user identifier received from the user matches the user identifier received in the persistent file (266);
or, if the remote registration or roaming log in is indicated:
generating an alternate password;
providing the alternate password to the user out-of-session using an out-of-session identifier;
providing from the computer system (202; 272) to the user a prompt for the alternate password;
receiving a response from the user responsive to the prompt;
determining if the response received from the user matches the alternate password; and
responsive to a determination that the response received matches the alternate password:
generating another persistent file comprising a user identifier and causing said another persistent file to be stored on a different client computer system (260);
responsive to a login request, receiving the another persistent file including the user identifier from the different client system (260);
providing at an output, a prompt to the user for the user identifier;
receiving a response from the user responsive to the prompt for the user identifier; and
determining if the response received from the user matches the user identifier received in the another persistent file (266); and
a password prompter (512) having an input coupled to the user identifier prompter output, the password prompter for, responsive to a determination by the user identifier prompter that the response received matches the user identifier received,
causing via a password prompter output the following to be provided to the user:
a prompt for confidential information, and
customization information identified in a registration process for said user, said customization information corresponding to the user identifier received that is perceptible to the user and can allow the user to authenticate the computer system (202; 272) if the customization information provided corresponds in a recognizable way to customization information expected by the user;
the correspondence of the customization information with the user identifier not ordinarily being publicly known;
wherein said system (200; 270) is adapted to receive said confidential information from said user and to compare said confidential information with confidential information stored for that user, and is further adapted to allow access to the computer system (202; 272) if the confidential information received from said user matches the confidential information to which it was compared.

14. The system of claim 13, the registration manager also being for receiving from the user, prior to a time at which the password prompter provides the customization information, an identification of the customization information to be provided by the password prompter.

15. The system of claim 14 wherein the customization information is identified by the user providing the customization information to the registration manager.

16. The system of claim 13 wherein the customization information for the user may be different from customization information for at least one other user who may log into the computer system (202; 272).

17. The system of claim 16, wherein the customization information for the user may be different from customization information for all other users who may log into the computer system (202; 272).

18. The system of claim 13 wherein the password prompter provides the customization information additionally responsive to at least one portion of a persistent file other than the user identifier.

19. The system of claim 13 wherein the password prompter provides the customization information additionally responsive to a portion of an identifier corresponding to the client system (260, 261).

20. The system of claim 13 wherein the user identifier is encrypted in the persistent file.

21. The system of claim 13 wherein the persistent file comprises a local shared object capable of being used by a Flash movie.

## Patentansprüche

1. Verfahren zum Empfangen nützlicher Informationen für das Anmelden eines Nutzers in einem Computer-System (202; 272), wobei das Verfahren die folgenden Schritte umfasst:
Bewirken des Speicherns einer Nutzerkennung in einer persistenten Datei (266) eines Client-Systems (261);
Empfangen einer Anforderung von dem Nutzer zum Anmelden in dem Computer-System (202; 272);
Bereitstellen einer Eingabeaufforderung an den Nutzer zum Eingeben einer Nutzerkennung und zum Angeben einer entfernten Registrierung oder einer Roaming-Anmeldung;
in Reaktion auf das Empfangen der Anforderung und der Nutzerkennung, falls die entfernte Registrierung oder die Roaming-Anmeldung nicht angegeben ist:
Empfangen der persistenten Datei (266) einschließlich der Nutzerkennung von dem Client-System (261); und
Feststellen, ob die von dem Nutzer empfangene Nutzerkennung der in der persistenten Datei (266) empfangenen Nutzerkennung entspricht;
oder, falls die entfernte Registrierung oder die Roaming-Anmeldung angegeben ist:
Erzeugen eines Ersatz-Passworts;
Bereitstellen des Ersatz-Passworts an den Nutzer über eine externe Verbindung und unter Verwendung einer externen Verbindungskennung;
Bereitstellen einer Eingabeaufforderung für das Ersatzpasswort von dem Computer-System (202; 272) an den Nutzer;
Empfangen einer Antwort von dem Nutzer in Reaktion auf die Eingabeaufforderung;
Feststellen, ob die von dem Nutzer empfangene Antwort dem Ersatzpasswort entspricht;
in Reaktion auf eine Feststellung, dass die empfangene Antwort dem Ersatzpasswort entspricht:
Erzeugen einer weiteren persistenten Datei, welche eine Nutzerkennung umfasst, und Bewirken, dass die weitere persistente Datei auf einem anderen Client-Computer-System (260) gespeichert wird;
in Reaktion auf eine Anmelde-Anforderung, Empfangen der anderen persistenten Datei einschließlich der Nutzerkennung von dem anderen Client-System (260);
Bereitstellen einer Eingabeaufforderung für die Nutzerkennung von dem Computer-System (202; 272) an den Nutzer;
Empfangen einer Antwort von dem Nutzer in Reaktion auf die Eingabeaufforderung für die Nutzerkennung; und
Feststellen, ob die von dem Nutzer empfangene Antwort der in der anderen persistenten Datei empfangenen Nutzerkennung entspricht; und
in Reaktion auf eine Feststellung, dass die empfangene Antwort der empfangenen Nutzerkennung entspricht:
Bereitstellen einer Eingabeaufforderung für vertrauliche Information von dem Computer-System (202, 272) an den Nutzer;
Bereitstellen von angepasster Information, welche in einem Registrierungsprozess für den Nutzer identifiziert wurde, an den Nutzer, wobei die angepasste Information der empfangenen Nutzerkennung, welche für den Nutzer wahrnehmbar ist, entspricht und dem Nutzer die Authentifizierung des Computer-Systems (202; 272) gestattet, falls die bereitgestellte angepasste Information einer von dem Nutzer erwarteten angepassten Information entspricht, wobei die Entsprechung zwischen der angepassten Information und der Nutzerkennung nicht allgemein öffentlich bekannt ist;
Empfangen der vertraulichen Information von dem Nutzer und Vergleichen der vertraulichen Information mit für den Nutzer gespeicherter vertraulicher Information; und
Gestatten eines Zugriffs auf das Computer-System (202; 272), falls die von dem Nutzer empfangene vertrauliche Information der vertraulichen Information, mit welcher sie verglichen wurde, entspricht.

2. Verfahren nach Anspruch 1, bei welchem die angepasste Information durch den Nutzer vor dem Empfangen der Anforderung identifiziert wurde.

3. Verfahren nach Anspruch 2, bei welchem die angepasste Information von dem Nutzer identifiziert wurde, welcher die angepasste Information an das Computer-System (202; 272) bereitstellt.

4. Verfahren nach Anspruch 1, bei welchem die angepasste Information für den Nutzer sich unterscheidet von angepasster Information für wenigstens einen weiteren Nutzer, welcher sich in dem Computer-System (202; 272) anmelden kann.

5. Verfahren nach Anspruch 4, bei welchem die angepasste Information für den Nutzer sich unterscheidet von angepasster Information für alle weiteren Nutzer, welche sich in dem Computer-System (202; 272) anmelden können.

6. Verfahren nach Anspruch 1, bei welchem der Schritt des Bereitstellens der angepassten Information an den Nutzer zusätzlich erfolgt in Reaktion auf das Empfangen wenigstens eines Teils der persistenten Datei, welcher nicht mit der Nutzerkennung übereinstimmt, von dem Client-System (260, 261).

7. Verfahren nach Anspruch 1, bei welchem der Schritt des Bereitstellens der angepassten Information an den Nutzer zusätzlich erfolgt in Reaktion auf wenigstens einen Teil einer Kennung, welche dem Client-System (260, 261) entspricht.

8. Verfahren nach Anspruch 7, bei welchem die Nutzerkennung in der Kennung, welche dem Client-System (260, 261) entspricht, verschlüsselt ist.

9. Verfahren nach Anspruch 7, bei welchem die Kennung, welche dem Computer-System (202; 272) entspricht, wenigstens eine Kennung wenigstens einer Hardware-Komponente des Client-Systems (260, 261) umfasst.

10. Verfahren nach Anspruch 1, bei welchem die Nutzerkennung in der persistenten Datei verschlüsselt ist.

11. Verfahren nach Anspruch 1, bei welchem die persistente Datei ein lokales geteiltes Objekt umfasst, welches dazu eingerichtet ist, von einem Flash-Movie verwendet zu werden.

12. Computerprogrammprodukt (174) mit computerlesbaren Programmcode (176) zum Ausführen des Verfahrens nach einem der vorangehenden Ansprüche.

13. System (200; 270) zum Empfangen von nützlicher Information für das Anmelden eines Nutzers in einem Computer-System (202, 272), wobei das System (200; 270) umfasst:
eine Registrierungsverwaltungseinheit (222), welche dazu eingerichtet, zu bewirken, dass eine Nutzerkennung in einer persistenten Datei (266) eines Client-Systems (261) gespeichert wird;
eine Nutzerkennung-Eingabeaufforderungseinheit (510), welche dazu eingerichtet ist, von dem Nutzer eine Anforderung zum Anmelden in dem Computer-System (202; 272) und eine Nutzerkennung und eine Angabe, ob eine entfernte Registrierung oder eine Roaming-Anmeldung gewählt ist, zu empfangen, und, falls die entfernte Registrierung oder die Roaming-Anmeldung nicht angegeben ist, in Reaktion auf die Anforderung und die empfangene Nutzerkennung folgende Schritte auszuführen:
Empfangen der persistenten Datei (266) einschließlich der Nutzerkennung von dem Client-System (261); und
Feststellen, ob die von dem Nutzer empfangene Nutzerkennung der in der persistenten Datei (266) empfangenen Nutzerkennung entspricht;
oder, sofern die entfernte Registrierung oder die Roaming-Anmeldung angegeben ist:
Erzeugen eines Ersatz-Passworts;
Bereitstellen des Ersatz-Passworts an den Nutzer über eine externe Verbindung und unter Verwendung einer externen Verbindungskennung;
Bereitstellen einer Eingabeaufforderung für das Ersatzpasswort von dem Computer-System (202; 272) and den Nutzer;
Empfangen einer Antwort von dem Nutzer in Reaktion auf die Eingabeaufforderung;
Feststellen, ob die von dem Nutzer empfangene Antwort dem Ersatzpasswort entspricht;
in Reaktion auf eine Feststellung, dass die empfangene Antwort dem Ersatzpasswort entspricht:
Erzeugen einer weiteren persistenten Datei, welche eine Nutzerkennung umfasst, und Bewirken, dass die weitere persistente Datei auf einem anderen Client-Computer-System (260) gespeichert wird;
in Reaktion auf eine Anmelde-Anforderung, Empfangen der anderen persistenten Datei einschließlich der Nutzerkennung von dem anderen Client-System (260);
Bereitstellen einer Eingabeaufforderung für die Nutzerkennung an den Nutzer an einem Ausgang;
Empfangen einer Antwort von dem Nutzer in Reaktion auf die Eingabeaufforderung für die Nutzerkennung;
Feststellen, ob die von dem Nutzer empfangene Antwort der in der anderen persistenten Datei (266) empfangenen Nutzerkennung entspricht; und
eine Passwort-Eingabeaufforderungseinheit (512) mit einem Eingang, welcher an einen Ausgang der Nutzerkennung-Eingabeaufforderungseinheit gekoppelt ist, wobei die Passwort-Eingabeaufforderungseinheit dazu eingerichtet ist, in Reaktion auf eine Feststellung durch die Nutzerkennung-Eingabeaufforderungseinheit, dass die empfangene Antwort der empfangenen Nutzerkennung entspricht, zu bewirken, dass über einen Ausgang der Passwort-Eingabeaufforderungseinheit dem Nutzer folgendes bereitgestellt wird:
eine Eingabeaufforderung für vertrauliche Information; und
angepasste Information, welche in einem Registrierungsprozess für den Nutzer identifiziert wurde, wobei die angepasste Information der empfangenen Nutzerkennung entspricht, welche für den Nutzer wahrnehmbar ist und es dem Nutzer erlaubt, das Computer-System (202; 272) zu identifizieren, falls die bereitgestellte angepasste Information in erkennbarer Weise angepasster Informationen entspricht, welche von dem Nutzer erwartet wird;
wobei die Entsprechung zwischen der angepassten Information und der Nutzerkennung nicht allgemein öffentlich bekannt ist;
wobei das System (200; 270) dazu eingerichtet ist, die vertrauliche Information von dem Nutzer zu empfangen und die vertrauliche Information mit vertraulicher Information, welcher für den Nutzer gespeichert ist, zu vergleichen, und ferner dazu eingerichtet ist, einen Zugriff auf das Computer-System (202; 272) zu gestatten, falls die von dem Nutzer empfangene vertrauliche Information der vertraulichen Information, mit welcher sie verglichen wurde, entspricht.

14. System nach Anspruch 13, bei welchem der Registrierungsverwaltungseinheit ferner dazu eingerichtet ist, von dem Nutzer vor einem Zeitpunkt, an welchem die Passwort-Eingabeaufforderungseinheit die angepasste Information bereitstellt, eine Identifikation der angepassten Information zu erhalten, welche von der Passwort-Eingabeaufforderungseinheit bereitgestellt wird.

15. System nach Anspruch 14, bei welchem die angepasste Information durch den Nutzer identifiziert wird, welcher die angepasste Information an die Registrierungsverwaltungseinheit bereitstellt.

16. System nach Anspruch 13, bei welchem die angepasste Information für den Nutzer sich unterscheiden kann von angepasster Information für wenigstens einen weiteren Nutzer, welcher sich in dem Computer-System (202; 272) anmelden kann.

17. System nach Anspruch 16, bei welchem die angepasste Information für den Nutzer sich unterscheiden kann von angepasster Information für alle weiteren Nutzer, welche sich in dem Computer-System (202; 272) anmelden können.

18. System nach Anspruch 13, bei welchem die Passwort-Eingabeaufforderungseinheit die angepasste Information zusätzlich in Reaktion auf wenigstens einen Teil einer persistenten Datei, welcher sich von der Nutzerkennung unterscheidet, bereitstellt.

19. System nach Anspruch 13, bei welchem die Passwort-Eingabeaufforderungseinheit die angepasste Information zusätzlich in Reaktion auf einen Teil einer Kennung, welche dem Client-System (260, 261) entspricht, bereitstellt.

20. System nach Anspruch 13, bei welchem die Nutzerkennung in der persistenten Datei verschlüsselt ist.

21. System nach Anspruch 13, bei welchem die persistente Datei ein lokales geteiltes Objekt umfasst, welches dazu eingerichtet ist, von einem Flash-Movie verwendet zu werden.

## Revendications

1. Procédé de réception d'informations utiles pour la connexion d'un utilisateur dans un système informatique (202 ; 272), comprenant :
amener un identifiant d'utilisateur à être stocké dans un fichier persistant (266) d'un système client (261) ;
recevoir, en provenance de l'utilisateur, une demande de connexion au système informatique (202 ; 272) ;
fournir, à l'utilisateur, une invite visant à saisir un identifiant d'utilisateur et visant à indiquer un enregistrement à distance ou une connexion en itinérance ;
en réponse à la demande et à l'identifiant d'utilisateur reçus, si l'enregistrement à distance ou la connexion en itinérance n'est pas indiqué(e) :
recevoir le fichier persistant (266) incluant l'identifiant d'utilisateur à partir du système client (261) ; et
déterminer si l'identifiant d'utilisateur reçu à partir de l'utilisateur correspond à l'identifiant d'utilisateur reçu dans le fichier persistant (266) ;
ou, si l'enregistrement à distance ou la connexion en itinérance est indiqué(e) :
générer un mot de passe alternatif ;
fournir le mot de passe alternatif à l'utilisateur hors session en utilisant un identifiant hors session ;
fournir, du système informatique (202 ; 272) à l'utilisateur, une invite pour le mot de passe alternatif ;
recevoir une réponse en provenance de l'utilisateur,
en réponse à l'invite ;
déterminer si la réponse reçue en provenance de l'utilisateur correspond au mot de passe alternatif ; et
en réponse à une détermination selon laquelle la réponse reçue correspond au mot de passe alternatif :
générer un autre fichier persistant comprenant un identifiant d'utilisateur, et amener ledit autre fichier persistant à être stocké sur un système informatique client différent (260) ;
en réponse à une demande de connexion, recevoir ledit autre fichier persistant incluant l'identifiant d'utilisateur à partir du système client différent (260) ;
fournir, du système informatique (202 ; 272) à l'utilisateur, une invite pour l'identifiant d'utilisateur ;
recevoir une réponse en provenance de l'utilisateur, en réponse à l'invite pour l'identifiant d'utilisateur ; et
déterminer si la réponse reçue en provenance de l'utilisateur correspond à l'identifiant d'utilisateur reçu dans ledit autre fichier persistant ; et
en réponse à une détermination selon laquelle la réponse reçue correspond à l'identifiant d'utilisateur reçu :
fournir, du système informatique (202 ; 272) à l'utilisateur, une invite pour des informations confidentielles ;
fournir à l'utilisateur des informations de personnalisation identifiées dans un processus d'enregistrement dudit utilisateur, lesdites informations de personnalisation correspondant à l'identifiant d'utilisateur reçu qui est perceptible par l'utilisateur et qui peut permettre à l'utilisateur d'authentifier le système informatique (202 ; 272) si les informations de personnalisation fournies correspondent à des informations de personnalisation attendues par l'utilisateur, dans lequel la correspondance des informations de personnalisation avec l'identifiant d'utilisateur n'est pas ordinairement publiquement connue ;
recevoir lesdites informations confidentielles à partir dudit utilisateur, et comparer lesdites informations confidentielles à des informations confidentielles stockées pour cet utilisateur ; et si les informations confidentielles reçues à partir dudit utilisateur correspondent aux informations confidentielles auxquelles elles ont été comparées, permettre l'accès au système informatique (202 ; 272).

2. Procédé selon la revendication 1, dans lequel les informations de personnalisation ont été identifiées par l'utilisateur préalablement à l'étape de réception de la demande.

3. Procédé selon la revendication 2, dans lequel les informations de personnalisation ont été identifiées par l'utilisateur fournissant les informations de personnalisation au système informatique (202 ; 272).

4. Procédé selon la revendication 1, dans lequel les informations de personnalisation de l'utilisateur peuvent être différentes des informations de personnalisation d'au moins un autre utilisateur pouvant être amené à se connecter au système informatique (202 ; 272).

5. Procédé selon la revendication 4, dans lequel les informations de personnalisation de l'utilisateur peuvent être différentes des informations de personnalisation de tous les autres utilisateurs pouvant être amenés à se connecter au système informatique (202 ; 272).

6. Procédé selon la revendication 1, dans lequel l'étape de fourniture des informations de personnalisation à l'utilisateur est en outre mise en oeuvre en réponse au fait qu'au moins une partie du fichier persistant reçu à partir du système client (260, 261) est distincte de l'identifiant d'utilisateur.

7. Procédé selon la revendication 1, dans lequel l'étape de fourniture des informations de personnalisation à l'utilisateur est en outre mise en oeuvre en réponse au fait qu'au moins une partie d'un identifiant correspond au système client (260, 261).

8. Procédé selon la revendication 7, dans lequel l'identifiant d'utilisateur est chiffré dans l'identifiant correspondant au système client (260, 261).

9. Procédé selon la revendication 7, dans lequel l'identifiant correspondant au système informatique (202 ; 272) comprend au moins un identifiant d'au moins un composant matériel du système client (260, 261).

10. Procédé selon la revendication 1, dans lequel l'identifiant d'utilisateur est chiffré dans le fichier persistant.

11. Procédé selon la revendication 1, dans lequel le fichier persistant comprend un objet local partagé apte à être utilisé par une animation Flash.

12. Produit-programme informatique (174) comprenant un code de programme lisible par ordinateur (176) pour mettre en oeuvre le procédé selon l'une des revendications précédentes.

13. Système (200, 270) pour recevoir des informations utiles pour la connexion d'un utilisateur dans un système informatique (202 ; 272), comprenant :
un gestionnaire d'enregistrement (222) pour amener un identifiant d'utilisateur à être stocké dans un fichier persistant (266) d'un système client (261) ;
un programme d'invite d'identifiant d'utilisateur (510) pour : recevoir, en provenance de l'utilisateur, une demande de connexion au système informatique (202 ; 272) ; et un identifiant d'utilisateur et une indication selon laquelle un enregistrement à distance ou une connexion en itinérance est sélectionné(e) ; et en réponse à la demande et à l'identifiant d'utilisateur reçus, si l'enregistrement à distance ou la connexion en itinérance n'est pas indiqué(e) :
recevoir le fichier persistant (266) incluant l'identifiant d'utilisateur à partir du système client (261) ; et
déterminer si l'identifiant d'utilisateur reçu à partir de l'utilisateur correspond à l'identifiant d'utilisateur reçu dans le fichier persistant (266) ;
ou, si l'enregistrement à distance ou la connexion en itinérance est indiqué(e) :
générer un mot de passe alternatif ;
fournir le mot de passe alternatif à l'utilisateur hors session en utilisant un identifiant hors session ;
fournir, du système informatique (202 ; 272) à l'utilisateur, une invite pour le mot de passe alternatif ;
recevoir une réponse en provenance de l'utilisateur, en réponse à l'invite ;
déterminer si la réponse reçue en provenance de l'utilisateur correspond au mot de passe alternatif ; et
en réponse à une détermination selon laquelle la réponse reçue correspond au mot de passe alternatif :
générer un autre fichier persistant comprenant un identifiant d'utilisateur, et amener ledit autre fichier persistant à être stocké sur un système informatique client différent (260) ;
en réponse à une demande de connexion, recevoir ledit autre fichier persistant incluant l'identifiant d'utilisateur à partir du système client différent (260) ;
fournir, au niveau d'une sortie, une invite, à l'utilisateur, pour l'identifiant d'utilisateur ;
recevoir une réponse en provenance de l'utilisateur, en réponse à l'invite pour l'identifiant d'utilisateur ; et
déterminer si la réponse reçue en provenance de l'utilisateur correspond à l'identifiant d'utilisateur reçu dans ledit autre fichier persistant (266) ; et
un programme d'invite de mot de passe (512) présentant une entrée couplée à la sortie du programme d'invite d'identifiant d'utilisateur, le programme d'invite de mot de passe étant destiné à, en réponse à une détermination, mise en oeuvre par le programme d'invite d'identifiant d'utilisateur, selon laquelle la réponse reçue correspond à l'identifiant d'utilisateur reçu, amener, par l'intermédiaire d'une sortie du programme d'invite de mot de passe, les éléments ci-dessous à être fournis à l'utilisateur :
une invite pour des informations confidentielles ; et
des informations de personnalisation identifiées dans un processus d'enregistrement dudit utilisateur, lesdites informations de personnalisation correspondant à l'identifiant d'utilisateur reçu qui est perceptible par l'utilisateur et qui peut permettre à l'utilisateur d'authentifier le système informatique (202 ; 272) si les informations de personnalisation fournies correspondent, d'une manière reconnaissable, à des informations de personnalisation attendues par l'utilisateur ;
la correspondance des informations de personnalisation avec l'identifiant d'utilisateur n'étant pas ordinairement publiquement connue ;
dans lequel le système (200 ; 270) est apte à recevoir lesdites informations confidentielles à partir dudit utilisateur, et à comparer lesdites informations confidentielles à des informations confidentielles stockées pour cet utilisateur, et ledit système est en outre apte permettre l'accès au système informatique (202 ; 272) si les informations confidentielles reçues à partir dudit utilisateur correspondent aux informations confidentielles auxquelles elles ont été comparées.

14. Système selon la revendication 13, dans lequel le gestionnaire d'enregistrement est en outre destiné à recevoir, en provenance de l'utilisateur, préalablement à un instant auquel le programme d'invite de mot de passe fournit les informations de personnalisation, une identification des informations de personnalisation à fournir par le programme d'invite de mot de passe.

15. Système selon la revendication 14, dans lequel les informations de personnalisation sont identifiées par l'utilisateur en fournissant les informations de personnalisation au gestionnaire d'enregistrement.

16. Système selon la revendication 13, dans lequel les informations de personnalisation de l'utilisateur peuvent être différentes des informations de personnalisation d'au moins un autre utilisateur pouvant être amené à se connecter au système informatique (202 ; 272).

17. Système selon la revendication 16, dans lequel les informations de personnalisation de l'utilisateur peuvent être différentes des informations de personnalisation de tous les autres utilisateurs pouvant être amenés à se connecter au système informatique (202 ; 272).

18. Système selon la revendication 13, dans lequel le programme d'invite de mot de passe fournit les informations de personnalisation en outre en réponse au fait qu'au moins une partie d'un fichier persistant est distincte de l'identifiant d'utilisateur.

19. Système selon la revendication 13, dans lequel le programme d'invite de mot de passe fournit les informations de personnalisation en outre en réponse au fait qu'une partie d'un identifiant correspond au système client (260, 261).

20. Système selon la revendication 13, dans lequel l'identifiant d'utilisateur est chiffré dans le fichier persistant.

21. Système selon la revendication 13, dans lequel le fichier persistant comprend un objet local partagé apte à être utilisé par une animation Flash.
